Europäisches Patentamt

European Patent Office

Office européen des brevets

(11) Publication number: **0 219 303**
**B1**

(12) **EUROPEAN PATENT SPECIFICATION**

(45) Date of publication of patent specification: **02.01.91**

(51) Int. Cl.⁵: **G 11 B 15/467,** G 11 B 5/588

(21) Application number: **86307739.2**

(22) Date of filing: **07.10.86**

(54) **Tracking control apparatus.**

(30) Priority: **08.10.85 JP 224039/85**

(43) Date of publication of application:
**22.04.87 Bulletin 87/17**

(45) Publication of the grant of the patent:
**02.01.91 Bulletin 91/01**

(84) Designated Contracting States:
**AT DE FR GB IT NL**

(56) References cited:
**EP-A-0 138 210**
**EP-A-0 150 992**
**EP-A-0 171 266**
**US-A-4 528 605**

**1986 IEEE INTERNATIONAL CONFERENCE ON
CONSUMER ELECTRONICS, Digest of Technical
papers, 3rd-6th June 1986, pages 48-49; A.
HITOMI et al.: "Session III - DAT (Digital audio
tape recorder)"**

(73) Proprietor: **SONY CORPORATION**
**7-35 Kitashinagawa 6-Chome Shinagawa-ku
Tokyo 141 (JP)**

(72) Inventor: **Yamada, Makoto Patents Division
Sony Corporation**
**6-7-35 Kitashinagawa Shinagawa-ku
Tokyo 141 (JP)**
Inventor: **Sugiki, Hiraku Patents Division Sony
Corporation**
**6-7-35 Kitashinagawa Shinagawa-ku
Tokyo 141 (JP)**
Inventor: **Odaka, Kentaro Patents Division Sony
Corporation**
**6-7-35 Kitashinagawa Shinagawa-ku
Tokyo 141 (JP)**

(74) Representative: **Pilch, Adam John Michael et al
c/o D. Young & Co. 10 Staple Inn
London WC1V 7RD (GB)**

Courier Press, Leamington Spa, England.

**Description**

This invention relates to tracking control apparatus, and in particular to such apparatus which is suitable for controlling tracking alignment of a rotary head, such as may be found in digital signal reproducing apparatus.

The present applicants have previously proposed a method for controlling tracking of a rotary reproducing head, which method uses only a reproduced output from such rotary reproducing head, that is which effects tracking control without the need for a stationary head.

This tracking control method is based on the fact that a pulse-code-modulated (PCM) signal can be readily timebase-compressed and/or timebase-decompressed, and therefore the PCM signal need not necessarily be recorded and/or reproduced continuously or in real time, as is required in the case of an analog signal. Thus the PCM signal can be recorded in one area of each of a succession of tracks on the record medium, and other signals can be recorded in other areas of each of the tracks which are different from the recording area for the PCM signal.

Specifically, when the PCM signal is timebase-compressed and recorded on a record medium by a plurality of rotary heads so as to form successive slanting tracks without any guard bands therebetween, pilot signals for use in tracking are recorded on an area of each track which is independent (in the longitudinal direction of the track) from the recording area for the PCM signal. Upon reproduction, each track is traced by a rotary head whose tracing width is wider than the width of the track, and the tracking alignment of the rotary head is controlled with reference to the reproduced pilot signals derived from both tracks adjacent the track which is being traced by the rotary head.

In a tracking alignment control method of the above type as previously proposed, a plurality of position detecting signals, which differ in frequency for adjacent tracks or which are different in recording length for adjacent tracks having the same frequency, are recorded on the tracks in accordance with a repeating sequence of a predetermined number of record tracks.

Upon reproduction, when a record track is traced by a rotary head whose tracing width is wider than that of the track, a pulse signal is formed on the basis of the starting point of a position detecting signal recorded on that track and, at the time of this pulse signal and in response thereto, a pilot signal is detected from a track adjacent the track being traced by the rotary head; tracking alignment of the rotary head is controlled with reference to the detected pilot signal.

This previously-proposed method is disclosed in European Patent Application Serial No. EP—A—0 171 266. During reproduction, when an identifying signal is at a low level, a position detecting signal having a long recording length is detected, and when the identifying signal is at a high level, a position detecting signal having a short recording length is detected. If the identifying signal results from frequency-dividing a switching pulse or change-over signal, a sampling pulse used to detect the tracking error is generated only when the recording length of a position detecting signal detected from the track being traced most clearly by the rotary head coincides with the polarity or level of the identifying signal for detecting a position detecting signal of that recording length.

However, when the signal for identifying tracks having position detecting signals with different recording lengths is generated independently of the signal reproduced from the record medium by the rotary head, as is the signal resulting from frequency-dividing the switching pulse described in the above-mentioned European Patent Application Serial No. EP—A—0 171 266, there occurs the following problem. Even in the on-track state, that is when there is no tracking error, if the identifying signal is not coincident in polarity or level with the recording length of the position detecting signals in the track being traced by the rotary head, no sampling pulse for detecting a tracking error is generated. As a result, upon reproduction, if the rotary head is once diverted from the on-track state, for example due to drift of the tape speed, the rotary head becomes stable after tracing the track once removed from the adjacent track. In other words, tracking is not stabilised until the rotary head has traced the track once removed from the adjacent track, thus increasing the time required for tracking control to be carried out in a stable manner, that is the pull-in time.

European Patent Application Serial No. EP—A—0 138 210 discloses a tracking control method in which first and second tracking signals are recorded on each odd-numbered track, and the first and a third tracking signal are recorded on each even-numbered track so that the second tracking signals on two odd-numbered tracks adjacent to any even-numbered track do not overlap. Crosstalk signals are detected from two adjacent tracks simultaneously with reproduction of the first and second or third tracking signals. Since the tracking signals are arranged in the above-described non-overlapping manner, this does not cause a problem. However, if such a non-overlapping tracking signal configuration cannot be used due to the tracking signals having different lengths, a different approach is necessary.

According to this invention there is provided a tracking control apparatus for controlling tracking alignment of a rotary head with respect to record tracks appearing in succession on a record medium and in each of which there are recorded, at predetermined positions varying from track to track in accordance with a predetermined repeating sequence, pilot signals for controlling tracking and two position detecting signals having equal recording lengths and which identify said positions of the pilot signals in adjacent tracks, repeating alternating first and second tracks having recorded thereon in alternating positions with respect to each other first and second position detecting signals of different recording lengths respectively, the apparatus comprising:

reproducing means responsive to the output of said rotary head for reproducing said position detecting signals recorded in a track traced by said rotary head;

detecting means for detecting said recording length of each position detecting signal reproduced by said reproducing means;

means responsive to said detecting means for providing an identifying signal which identifies said recording length of the position detecting signal being reproduced from the track traced by said rotary head only when at least two position detecting signals having the same recording length have been detected successively; and

generating means responsive to said identifying signal for generating a sampling signal timed to sample the pilot signals reproduced as cross-talk from tracks adjacent said track being traced by said rotary head, whereby tracking control can be effected.

In a preferred embodiment of the invention, upon reproduction, the track adjacent or next removed from the adjacent track containing a position detecting signal having a different recording length, is identified by the detecting state of a position detecting signal which is being reproduced at that time, thereby reducing the pull-in time for tracking alignment. The perferred apparatus is suitable for use with digital signal reproducing apparatus.

The invention will now be described by way of example with reference to the accompanying drawings, throughout which like parts are referred to by like references, and in which:

Figure 1 (formed by Figures 1A and 1B) is a block diagram showing a tracking control apparatus according to an embodiment of this invention;

Figure 2 is a diagram showing one example of a rotary head assembly which can be used in the tracking control apparatus shown in Figure 1;

Figure 3 is a schematic representation showing a recording track pattern which can be tracked by the apparatus shown in Figure 1;

Figures 4A to 4J are signal waveform diagrams to which reference will be made in explaining the recording operation of the tracking control apparatus shown in Figure 1;

Figures 5A to 5H are signal waveform diagrams to which reference will be made in explaining the reproducing operation of the tracking control apparatus shown in Figure 1;

Figure 6 is a circuit block diagram showing a specific example of a main portion of the tracking control apparatus shown in Figure 1; and

Figures 7A to 7G, 8A to 8F, 9A to 9M and 10A to 10M are signal waveform diagrams to which reference will be made in explaining the operation of the main portion of the tracking control apparatus shown in Figure 6.

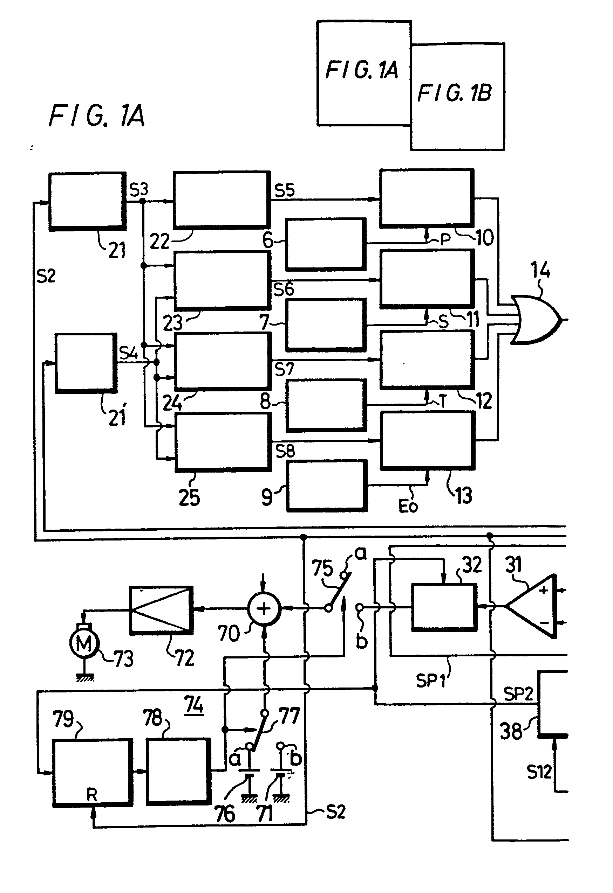

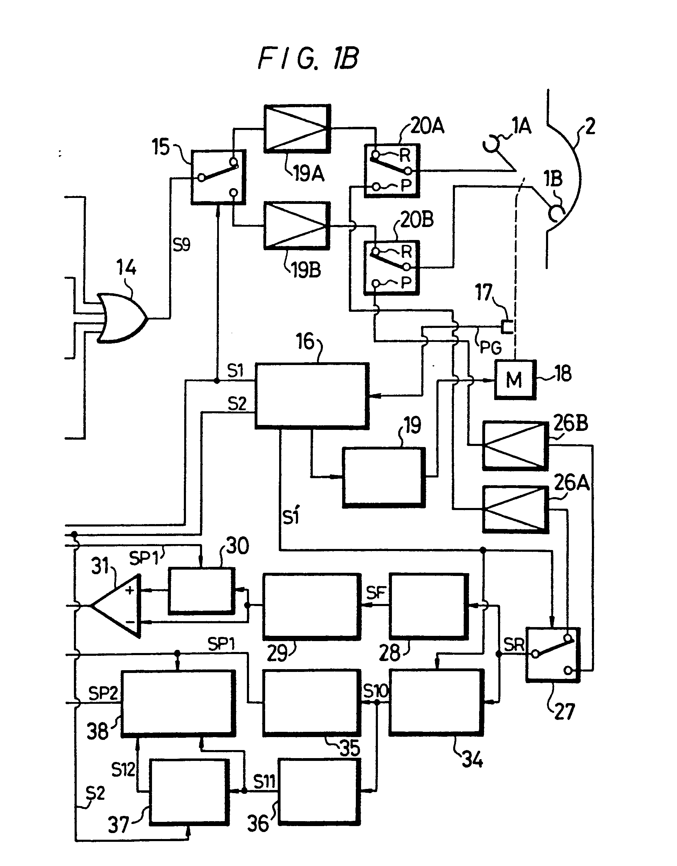

Figure 1 (formed by Figures 1A and 1B on separate sheets of drawings to permit the use of a suitably large scale) schematically illustrates a circuit arrangement employed in a tracking control apparatus according to an embodiment of this invention, and which is used to record and reproduce pilot signals for tracking, position detecting signals and erase signals. In other words, Figure 1 only illustrates the circuit arrangement for recording and reproducing those signals with which embodiments of the present invention are directly concerned, and therefore a circuit arrangement for recording and reproducing the information signal, such as, for example, a pulse-code-modulated (PCM) signal, has been omitted from Figure 1.

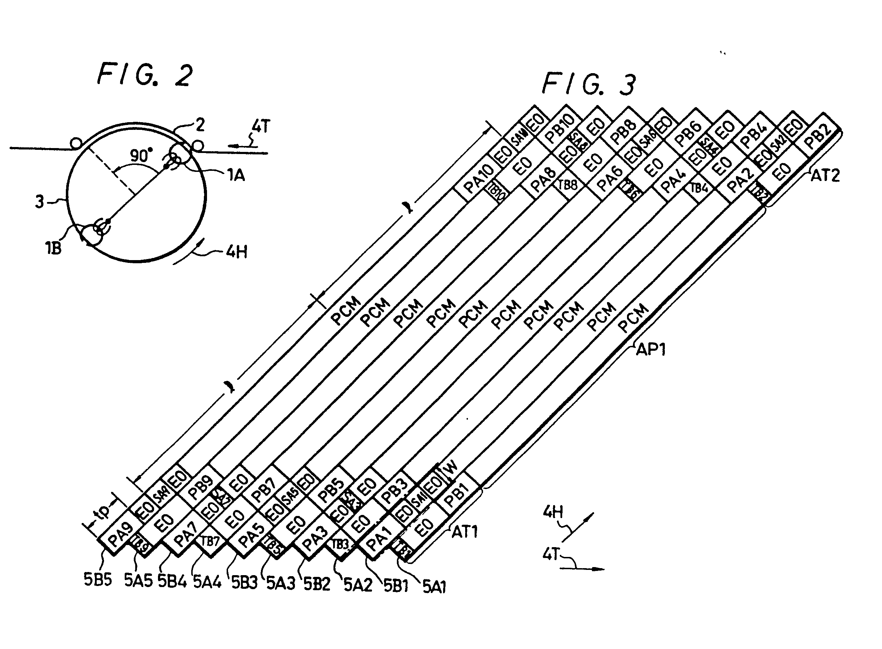

Referring in detail to Figure 1, the circuit arrangement includes rotary magnetic heads 1A and 1B arranged to record and/or reproduce signals on to or from a magnetic tape 2 which is used as the record medium. As shown in Figure 2, the rotary heads 1A and 1B are mounted on the periphery of a tape guide drum 3 and are angularly separated by 180°. The magnetic tape 2 is shown to be wrapped around the outer periphery of the tape guide drum 3 to an angular extent less than 180°, for example, an angular extent of 90°, as shown. The rotary heads 1A and 1B are typically rotated at the rate of 30 revolutions per second in the direction shown by an arrow 4H, while the magnetic tape 2 is transported at a predetermined speed in the direction shown by an arrow 4T, so that slanting magnetic tracks 5A and 5B (Figure 3) are formed one by one on the magnetic tape 2 by the rotary heads 1A and 1B, respectively, in a so-called overlapping writing state, that is, a width (tracing width) $W$ of each head gap is selected to be greater than the track width. In this case, the gaps of the rotary heads 1B and 1B extend in different directions relative to the direction perpendicular to their tracing directions. In other words, the so-called azimuth angles of the rotary heads 1A and 1B are selected to be different from each other to take advantage of the azimuth effect for cancelling or at least attenuating cross-talk.

It will be appreciated there is a period during each revolution of the head assembly in which neither of the two rotary heads 1A and 1B is in contact with the magnetic tape 2, and this period corresponds to an angular range of 90° in the illustrated embodiment. If this non-contact period is used to perform the addition of redundant data during recording and to perform error correction and the like during playback, it is possible to simplify the system.

Referring back to Figure 1, a pilot signal oscillator or generator 6 is provided for providing a tracking pilot signal P, which has a frequency $f_0$, selected to be for example about 200 kHz, and which is recorded at a relatively high level. If linearity between a tracking phase displacement and a reproduced pilot signal

3

output is to be ensured, the frequency $f_0$ of the tracking pilot signal P is arranged to be a frequency presenting a relatively small amount of azimuth loss.

Position detecting signal generators 7 and 8 are provided for respectively producing position detecting signals S and T that are used to detect the position of the pilot signal P. These position detecting signals S and T are also used as an erase signal for the pilot signal P. In other words when new information is to be recorded on a magnetic tape on which information was previously recorded while erasing the previously recorded information, since it cannot be guaranteed that the new record track is always coincident with the corresponding previously-recorded track, the signals S and T are used when the previously-recorded pilot signal has to be erased. The frequencies f1 and f2 of the position detecting signals S and T are selected to be substantially different from the frequency $f_0$ of the pilot signal P; for example, the frequencies f1 and f2 may be about 500 kHz and 700 kHz, respectively. Further, the recording levels of the signals S and T are selected to ensure that the pilot signal P will be effectively erased thereby.

An oscillator or generator 9 is arranged to generate an erase signal $E_0$ at a frequency f3. In the embodiment being described, it is preferable that the erase signal $E_0$ have a high erase ratio to erase the tracking pilot signal P and the position detecting signals S and T when the signals P, S and T are written in an overlapping fashion. The frequency f3 of the erase signal $E_0$ is selected to be, for example, about 2 MHz.

Recording waveform generators or gating circuits 10, 11, 12 and 13 are provided which respond to an edge, for example a trailing edge, of a respective delayed signal $S_5$, $S_6$, $S_7$ or $S_8$ associated with a pulse PG, as hereinafter described in detail, to produce signals as follows. The recording waveform generator 10, on the basis of the respective gating signal $S_5$, passes the pilot signal P from the pilot signal generator 6 for a predetermined time interval *tp* (for example 76.5 μsec) in accordance with the number and arrangement of the pilot signals P to be recorded in a track. The recording waveform generators 11, 12 and 13, on the basis of the gating signals $S_6$, $S_7$ and $S_8$, respectively, pass the position detecting signals S and T and the erase signal $E_0$ from the generators 7, 8 and 9, respectively, for predetermined time intervals in accordance with the number and arrangement of the position detecting signals S, T and the erase signal $E_0$ to be recorded in a track. An OR-gate circuit 14 is provided to receive the outputs from the generators 10 to 13.

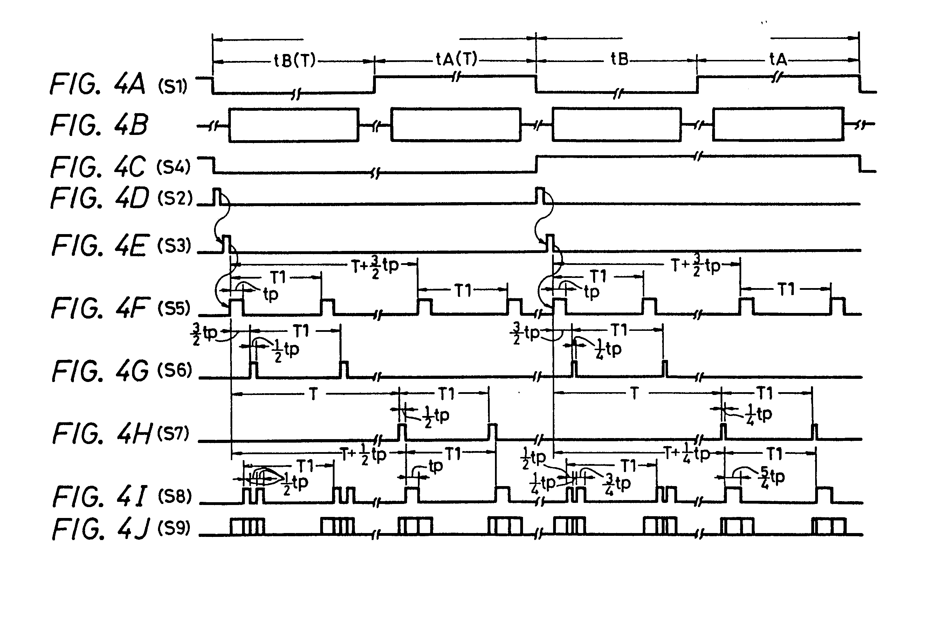

A switching circuit 13 is provided to change over connections to the rotary heads 1A and 1B in response to a switching signal S1 (Figure 4A) derived from a timing signal generator 16. The timing signal generator 16 is supplied with the pulse PG having a frequency of 30 Hz and which is generated by a pulse generator 17 in synchronism with the rotation of a motor 18 that drives the rotary heads 1A and 1B. Thus the pulse PG is indicative of the rotary phase of the rotary heads 1A and 1B. A pulse signal with a frequency of 30 Hz is supplied from the timing signal generator 16 in response to the pulse PG, and is applied to a phase servo circuit 19 by which the rotary phase of the motor 18 is controlled.

The pilot signal, the position detecting signals and the erasing signal from the switching circuit 15 (which is changed over in response to the switching signal S1) are amplified by a respective one of amplifiers 19A or 19B and then supplied through a contact R of a respective record/playback switching circuit 20A or 20B to the rotary head 1A or 1B for recording by the latter on the magnetic tape 2. The switching circuits 20A and 20B are connected to engage their contacts R upon recording, and to engage their contacts P upon playback.

An output signal S2 (Figure 4D) from the timing signal generator 16 is supplied to a delay circuit 21 in which it is delayed by a delay time determined in accordance with the interval of the rotary heads 1A, 1B and the mounting position of the pulse generator 17, and the like. A delayed output signal S3 (Figure 4E) from the delay circuit 21 is fed to each of four recording timing generators 22, 23, 24 and 25. The switching signal S1 from the timing signal generator circuit 16 is frequency-divided by two in a frequency divider 21' to provide a signal S4 having a frequency half that of the signal S1 (Figure 4C) and which is supplied to the recording timing generators 23, 24 and 25. The recording timing generators 22, 23, 24 and 25 generate the gating or timing signals $S_5$, $S_6$, $S_7$ and $S_8$ which are used as recording references for the pilot signal and the like. In the embodiment being described, the trailing edge of the signal S3 (Figure 4E) as delayed by the delay circuit 21 is made coincident with the time at which a first rotary head, for example, the head 1B, comes into contact with the tape 2 during each rotation period.

The recording timing generator 22 produces the signal S5 (Figure 4F) so as to include a first pulse synchronised with the trailing edge of the signal S3 at the commencement of the half rotation period of one of the heads (for example, the half rotation period of the rotary head 1B), and another first pulse delayed by a time interval T+3/2 tp (in which T represents the time corresponding to the half rotation period of each of the heads) from the trailing edge of the signal S3 so as to occur during the half rotation period of the other head 1A. Each of the above-described first pulses of the signal S5 is followed, after a time interval T1, by a similar second pulse, and all such pulses of the signal S5 have a duration time of tp.

The recording timing generator 23 generates the signal S6 (Figure 4G) so as to include a first pulse delayed by the time 3/2 tp from the trailing edge of the signal S3 and allowed, at the predetermined time interval $T_1$, by a second pulse. Such first and second pulses of the signal S6 occur only during the half rotation period of one of the heads, for example, during only the half rotation period of the head 1B. Further, for example, during each odd-numbered rotation of the heads, the duration time of each pulse of the signal S6 is 1/2 tp, whereas during each even-numbered rotation of the heads, the duration time of each pulse of the signal S6 is 1/4 tp.

The recording timing generator 24 generates a signal S7 (Figure 4H) so as to include a first pulse delayed from the trailing edge of the signal S3 by the time interval T and occurring only during the half rotation period of the other head, for example only the half rotation period of the head 1A, and a second pulse following the first pulse of the signal S7 by a predetermined interval T1. Further, the duration time of each pulse of the signal S7 is 1/2 tp during each odd-numbered rotation of the heads, while the duration time of each such pulse is 1/4 tp during the even-numbered rotation of the heads.

The recording timing generator 25 generates the signal S8 (Figure 4I) as follows. During the half rotation period of the head 1B in an odd-numbered rotation of the heads, the signal S8 includes a first pair of pulses, the first pulse of which is delayed by the time tp from the trailing edge of the signal S3 with a time interval of 1/2 tp between the pair of pulses and with a similar pair of pulses at the time interval T1 after the first pair. Further, each of these pulses has a duration of 1/2 tp. During the half rotation period of the other head 1A in an odd-numbered rotation of the heads, there is generated a first pulse having a duration time tp and delayed by a time T+1/2 tp from the trailing edge of the signal S3 and a second similar pulse at the predetermined interval T1 after the corresponding first pulse. On the other hand, during the half rotation of the head 1B in an even-numbered rotation of the heads, there are generated a first pair of pulses delayed by a time tp from the trailing edge of the signal S3 and whose duration times are respectively 1/2 tp and 3/4 tp with an interval 1/4 tp therebetween, and a second pair of similarly configured pulses following the first pair by the interval T1. Further, during the half rotation period of the head 1A in an even-numbered rotation period of the heads, there is generated a first pulse delayed by a time T+1/4 tp from the trailing edge of the signal S3 and whose duration time is 5/4 tp, with a similar second pulse of 5/4 tp duration being generated at the interval T1 after such first pulse.

As earlier noted, the signal S5 (Figure 4F), the signal S6 (Figure 4G), the signal S7 (Figure 4H) and the signal S8 (Figure 4I) from the recording timing generators 22, 23, 24 and 25 are supplied as gate signals to the recording waveform generators 10, 11, 12 and 13, respectively, so that the pilot signal P, the position detecting signals S and T and the erase signal $E_0$ from the generators 6, 7, 8 and 9 are supplied through the recording waveform generators 10, 11, 12 and 13, respectively, to the OR-gate circuit 14 as shown in Figure 1 only during the above-described pulses of the signals $S_5$, $S_6$, $S_7$ and $S_8$. Thus, the signals P, S, T and $E_0$ are developed at the output side of the OR-gate circuit 14 as a composite signal S9 (Figure 4J).

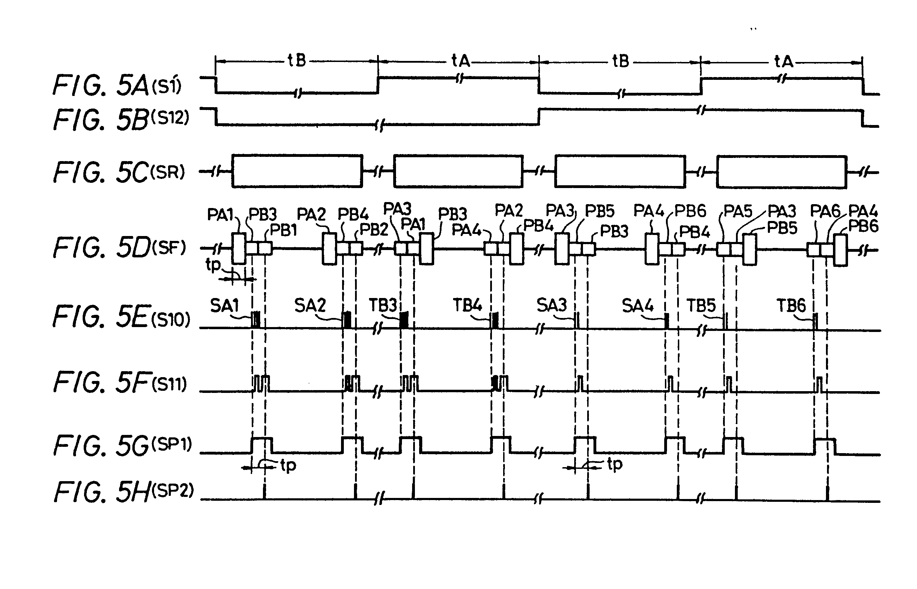

Referring again to Figure 1, it will be seen that amplifiers 26A and 26B are provided, and are supplied with the reproduced outputs from the corresponding rotary heads 1A and 1B when the switching circuits 20A and 20B are changed in position to engage their contacts P in the playback mode. The outputs of the amplifiers 26A and 26B are supplied to a switching circuit 27. The switching circuit 27 is alternately changed-over by a switching signal S1' (Figure 5A) of 30 Hz frequency from the timing signal generator 16 so as to connect to the amplifier 27A during the half rotation period including the tape contact period of the head 1A and to connect to the amplifier 27B during the half rotation period including the tape contact period of the head 1B.

A band pass filter 28 having a narrow pass band with a centre frequency $f_0$ is provided to pass only the pilot signal P from the reproduced output of the switching circuit 27. An envelope detector 29 is provided to envelope-detect the output from the band pass filter 28 and the output from the envelope detector 29 is sampled and then held by a sample and hold circuit 30. A comparator or differential amplifier 31 is provided to compare the outputs from the envelope detector 29 and the sample and hold circuit 30. A sample and hold circuit 32 is provided to sample and hold the compared output or error signal from the differential amplifier 31. These sample and hold circuits 30 and 32 function to sample and hold a cross-talk component of the pilot signals recorded on both end portions of the tracks adjacent to the track being traced in the normal playback mode, as will be described later. Accordingly, the output from the sample and hold circuit 32 is used as a tracking control signal.

In order to form the sampling pulses for the sample and hold circuits 30 and 32, a position detecting signal detector 34 is connected to the output side of the switching circuit 27 to detect the position detecting signals S and T in the reproduced output. An output S10 (Figure 5E) from the detector 34 is supplied to a pulse generator 35 and to a counter 36. The pulse generator 35 is arranged to generate a first sampling pulse SP1 (Figure 5G) in synchronism with the leading edge of the detected output S10 (Figure 5E) from the position detecting signal detector 34. The first sampling pulse SP1 is supplied to the sample and hold circuit 30.

The counter 36 is operative to count the number of waves or pulses contained in the output signal S10 from the signal detector 34. If the counted wave number corresponds to a position detecting signal whose recording length is long, the counter 36 generates an output signal S11 (Figure 5F) having first and second pulses. On the other hand, if the counted wave number corresponds to a position detecting signal whose recording length is short, the counter 36 generates the output signal S11 (Figure 5F) having only a single first pulse. In other words, the counter 36 measures the recording length of the position detecting signals reproduced from the track that is being scanned or traced by a rotary head during one revolution of the rotary drum. The output signal S11 from the counter 36 is supplied to an identifying signal generator 37 and a timing pulse generator 38. The identifying signal generator 37 is also supplied with the signal S2 from the timing signal generator 16. On the basis of the count measured by the counter 36, the identifying signal generator 37 determines the level of an identifying signal S12 (Figure 5B) provided therefrom. More particularly, when no position detecting signal is detected at all during one revolution of the rotary drum, that is, during one period of the signal S2 which condition will be hereinafter referred to as a first mode, the identifying signal generating circuit 37 cannot judge the track being scanned, and merely generates an identifying signal S12 whose polarity is inverted in response to each signal or pulse S2. When a position detecting signal having a long recording length and a position detecting signal having a short recording length and both detected during one revolution of the rotary drum which condition will be referred to as a second mode, the rotary head is assumed to be simultaneously tracing adjacent tracks and, in this case also, the identifying signal generating circuit 37 cannot judge the track being scanned or traced so that the identifying signal generating circuit 37 again supplies an identifying signal S12 whose polarity is inverted in response to each pulse of the signal S2. When a position detecting signal having a short recording length is detected at least once and no position detecting signal having a long recording length is detected during one revolution of the rotary drum, which condition will be referred to as a third mode, it is assumed that the rotary head is tracing a track on which a position detecting signal having a short recording length has been recorded, and that a track on which a position detecting signal having a long recording length has been recorded will be scanned or traced during the next revolution length has been recorded will be scanned or traced during the next revolution of the rotary drum. In that case, the identifying signal generator 37 causes the identifying signal S12 to have a specific level, for example, a high level "H" regardless of the pulse or signal S2, and supplies such low level signal S12 to the timing pulse generator 38. Finally, when a position detecting signal having a long recording length is detected at least once during one revolution of the rotary drum and no position detecting signal having a short recording time is detected, which condition will be referred to as a fourth mode, it is assumed that the rotary head is tracing a track on which a position detecting signal having a long recording length has been recorded, and that a track on which a position detecting signal having a short recording length has been recorded will be scanned or traced during the next revolution. In such fourth mode, regardless of the signal S2, the identifying signal S12 is made to assume a level different from that described above for the third mode, for example, a low level "L".

The timing pulse generator 38 responds to the identifying signal S12 from the identifying signal generator 37 and the output signal S11 from the counter 36 and generates, in response to the signals S11 and S12, a second sampling pulse SP2 (Figure 5H) with a delay of a predetermined time, for example, the time $tp$ after the generation of the first sampling pulse SP1. More particularly, in the case of the identifying signal S12 being at the low level "L", the timing pulse generator 38 generates a second sampling pulse SP2 only when the output S11 supplied thereto from the counter 36 comprises a pair of first and second pulses, and the generator 38 does not generate the second sampling pulse SP2 when the output S11 supplied thereto comprises only the first pulse. In the case of the identifying signal S12 being at the high level "H", the timing pulse generator 38 generates the second sampling pulse SP2 only when the output S11 supplied from the counter 36 has only the first pulse. When the output S11 from the counter 36 to the timing pulse generator 38 has the first and second pulses and the signal S12 is at the high level, the generator 38 does not generate the second sampling pulse SP2. In other words, when the identifying signal S12 is at the low level "L", the timing pulse generator 38 generates the second sampling pulse SP2 in response to the position detecting signal having a long recording length, whereas, when the identifying signal S12 is at the high level "H", the timing pulse generator 38 generates the second sampling pulse SP2 in response to the position detecting signal having a short recording length.

Therefore, the generation of the second sampling pulse SP2 in the above-mentioned first to fourth modes is as follows. In the first mode, no position detecting signal is detected so that the sampling pulse generator 38 does not generate the second sampling pulse SP2; in the second mode, if the level of the identifying signal S12 is at the low level "L", the sampling pulse generator 38 generates the second sampling pulse SP2 only when a position detecting signal having the long recording length is detected, whereas, if the level of the identifying signal S12 is at the high level "H", the sampling pulse generator 38 generates the second sampling pulse SP2 only when a position detecting signal having the short recording length is detected; in the third mode, the identifying signal S12 is at the high level "H" so that the sampling pulse generator 38 generates the second sampling pulse SP2 only when the position detecting signal having the short recording length is detected; and, in the fourth mode, the identifying signal S12 is at the low level "L" so that the sampling pulse generator 38 generates the second sampling pulse SP2 only when a position detecting signal having the long recording length is detected.

The second sampling pulse SP2 generated by the timing pulse generator 38 as set forth above is supplied to the sample and hold circuit 32.

At the output side of the sample and hold circuit 32, there is provided an adder 70. In normal operation, the signal derived from the sample and hold circuit 32, a bias signal derived from a first DC power source 71 and used as a reference for normal operation, and a velocity error signal from a velocity servo system (not shown) are supplied to the adder 70 and added together therein. The added signal from the adder 70 is supplied through a motor drive circuit 72 to a capstan motor 73.

Further, in the present embodiment, there is provided a velocity control circuit 74. Specifically, this velocity control circuit 74 comprises a switch 75 provided between the sample and hold circuit 32 and the adder 70, a second DC power source 76 connected in parallel to the first DC power source 71 and providing a potential which falls within a tracking servo pull-in range, a switch 77 used to change over from one to the other of the first and second DC power sources 71 and 76, a flip-flop circuit 78 for generating a switching signal which changes over the switches 75 and 77, and a counter 79 arranged to be reset by the signal S2 and which generates a signal "1" for setting the flip-flop circuit 78 when the second sampling pulse SP2 is detected a predetermined number of times, for example, two times or four times during one revolution of the rotary drum. The switches 75 and 77 are positioned to engage respective contacts $a$ thereof when the tracking servo is started. However, upon the starting of the tracking servo, when the second sampling pulse SP2 is detected two times or four times during one revolution of the rotary drum, as described above, so that the flip-flop circuit 78 is set, the switches 75 and 77 are changed over to engage their contacts $b$ and hence the normal tracking operation mode is established.

The operation of the circuit arrangement shown in Figure 1 will now be described with reference to the signal waveforms shown in Figures 4A to 4J and Figures 5A to 5H.

Upon recording, in response to the pulse PG from the generator 17 indicating the rotary phases of the heads 1A and 1B, the timing signal generator 16 produces the signal S2 shown in Figure 4D. The signal S2 is supplied to and delayed for a predetermined time by a delay circuit 21 so as to provide the signal S3 shown in Figure 4F. This signal S3 is supplied to the recording timing generators 22 to 25 as mentioned above so that the recording timing generator 22 produces, at its output side, the signal S5 shown in Figure 4F. The switching signal S1 (Figure 4A) from the timing signal generator 16 is supplied to the frequency divider 21' which produces, at its output, the signal S4 shown in Figure 4C. This signal S4 is supplied to the recording timing generators 23, 24 and 25 whereby, in response to the signals S3 and S4, the recording timing generators 23, 24 and 25 produce, at their respective outputs, the signals S6, S7 and S8 which are shown in Figures 4G, 4H and 4I, respectively.

The signals S5, S6, S7 and S8 are supplied as gating signals to the recording waveform generators 10, 11, 12 and 13, respectively. Thus, the recording waveform generator 10 passes therethrough the pilot signal P from the oscillator or generator 6 at the predetermined times and for the predetermined periods $tp$ determined by the signal S5, as shown in Figure 4F. The recording waveform generator 11 passes therethrough the position detecting signal S from the generator 7 at each predetermined time and for the predetermined time period $1/2\ tp$ or $1/4\ tp$ determined by the signal S6, as shown in Figure 4G. The recording waveform generator 12 passes therethrough the position detecting signal T from the generator 8 at each predetermined time and for the predetermined time period $1/2\ tp$ or $1/4\ tp$ determined by the signal S7, as shown in Figure 4H. The recording waveform generator 13 passes therethrough the erase signal $E_0$ from the generator 9 at each predetermined time and for the predetermined time period determined by the signal S8, as shown in Figure 4I.

The output signals from the recording waveform generators 10 to 13 are added together or composed by the OR-gate circuit 14 so that, at the output side of the OR-gate circuit 14, there is produced the composed signal S9 shown in Figure 4J.

At this time, let it be assumed that, for example, the head 1B is recording a track 5B1 in Figure 3 (in the first half period tB in Figure 4). Then, the first and second pulses of the signal S5 in Figure 4F correspond in time to pilot signals PA1 and PA2, respectively; the first and second pulses of the signal S6 in Figure 4G correspond in time to position detecting signals SA1 and SA2, respectively; and the first and second pairs of pulses of the signal S8 in Figure 4I correspond in time to the erase signals $E_0$ which straddle the position detecting signals SA1 and SA2, respectively. In such a case, the signal S9 is composed of grouped intervals of the signals P, S and $E_0$ corresponding to the grouped signals PA1, $E_0$, SA1, $E_0$ and to the grouped signals PA2, $E_0$, SA2, $E_0$ and which are produced at the output side of the OR-gate circuit 14 for each group.

Further, let it now be assumed that, for example, the head 1A is recording a track 5A2 in Figure 3 (in the first half period tA in Figure 4). Then, the first and second pulses of the signal S5 in Figure 4F respectively correspond in time to pilot signals PB3 and PB4; the first and second pulses of the signal S7 in Figure 4H respectively correspond in time to position detecting signals TB3 and TB4; and the first and second pulses of the signal S8 in Figure 4I respectively correspond in time to the erase signals $E_0$ which are adjacent one side of the position detecting signals TB3 and TB4. In such a case, the signal S9 is composed of intervals of the signals T, $E_0$ and P corresponding to the grouped signals TB3, $E_0$, PB3 and to the grouped signals TB4, $E_0$, PB4, and which are produced at the output side of the OR-gate circuit 14 for each group.

Further, when, for example, the head 1B is recording a track 5B2 in Figure 3 (the second half period tB in Figure 4), the first and second pulses of the signal S5 in Figure 4F respectively correspond to pilot signals PA3 and PA4; the first and second pulses of the signal S6 in Figure 4G respectively correspond to position detecting signals SA3 and SA4; and the first and second pairs of pulses of the signal S8 in Figure 4I respectively correspond to the erase signals $E_0$ which straddle the position detecting signals SA3 and SA4. In this case, the signal S9 is composed of intervals of the signals P, $E_0$ and S corresponding to the grouped signals PA3, $E_0$, SA3, $E_0$ and the grouped signals PA4, $E_0$, SA4, $E_0$, and which are produced at the output of the OR-gate circuit 14 for each group.

Furthermore, when, for example, the head 1A records the track 5A3 in Figure 3 (the second half period tA in Figure 4), the first and second pulses of the signal S5 shown in Figure 4F correspond to pilot signals PB5 and PB6, respectively; the first and second pulses of the signal S7 in Figure 4H respectively correspond to position detecting signals TB5 and TB6; and the first and second pulses of the signal S8 in Figure 4I respectively correspond to the erase signals $E_0$ which are adjacent one side of the position detecting signals TB5 and TB6. In this case, the signal S9 is composed of intervals of the signals T, $E_0$ and P corresponding to the grouped signals TB5, $E_0$, PB5 and to the grouped signals TB6, $E_0$, PB6, and which are produced at the output side of the OR-gate circuit 14 for each group.

Moreover, the timing signal generator 16 produces the switching signal S1 (Figure 4A) in response to

7

the pulse PG derived from the pulse generator 17. This signal S1 is in synchronism with the rotation of the rotary heads 1A and 1B so that, as shown in Figures 4A and 4B, during the half rotation period tA in which the signal S1 is at a high level, the head 1A comes into contact with the magnetic tape 2, whereas during the half rotation period tB in which the signal S1 is at a low level, the head 1B comes into contact with the magnetic tape 2. The switching circuit 15 is positioned by the signal S1 to be in the state shown in Figure 1 during the period tA and to be changed over to the opposite state during the period tB.

Accordingly, when the switching circuit 15 is changed over to the state opposite that illustrated in Figure 1, the signal S9 developed at the output of the OR-gate circuit 14 is supplied through the amplifier 19B and the contact R of the switching circuit 20B to the head 1B, whereby the signal S9 is recorded in record regions AT1 and AT2 (Figure 3) at the beginning and end, respectively, of the contact period of the head 1B with the magnetic tape 2 within the period tB. Such record regions AT1 and AT2 provided at opposite end portions of the track 5B for the tracking signal are spaced in the longitudinal direction along the track 5B from the centre of the latter by equal distances. Such recording of the signal S9 occurs in an odd-numbered revolution of the heads, that is, in the first period tB in Figure 4, for a time period tp+1/2 tp+1/2 tp+1/2 tp and then for a time period tp+1/2 tp+1/2 tp+1/2 tp, whereas, in an even-numbered revolution of the head, that is, in the second period tB in Figure 4, recording of the signal S9 occurs for a time period tp+1/2 tp+1/4 tp+3/4 tp and then for a time period tp+1/2 tp+1/4 tp+3/4 tp.

On the other hand, when the switching circuit 15 is disposed in the state illustrated in Figure 1, the signal S9 is supplied through the amplifier 19A and the contact R of the switching circuit 20A to the head 1A, whereby the signal S9 is recorded in similar record regions AT1 and AT2 at the beginning and end of the contact region of the head 1A with the magnetic tape 2. As before, these similar record regions AT1 and AT2 provided at opposite end portions of the track 5A are equally distant, in the longitudinal direction, from the central position of the track 5A. Such recording of the signal S9 occurs during an odd-numbered revolution of the heads (the first period tA in Figure 4) for a time period 1/2 tp+tp+tp and then for a time period 1/2 tp+tp+tp, whereas, during an even-numbered revolution of the heads (the second period tA in Figure 4), recording of the signal S9 occurs for a time period 1/4 tp+5/4 tp+tp and then for a time period 1/4 tp+5/4 tp+tp.

In the time periods between those in which the pilot signals, position detecting signals and erase signals are recorded, segment portions of audio PCM signals to be recorded in respective tracks are supplied by a suitable circuit (not shown) through the amplifier 19A to the head 1A during the period tA, and through the amplifier 19B to the head 1B during the period tB, so that such audio PCM signals are recorded on the record regions AP1 of the tracks 5A and 5B between the record regions AT1 and AT2.

The reproduction or playback of the signals recorded as mentioned above will now be described.

In the playback mode, the motor 18 is servo-controlled by the phase servo circuit 19 in a manner similar to that described for the recording mode.

The signals reproduced from the magnetic tape 2 by the rotary heads 1A and 1B are respectively supplied through the contact P of the switching circuit 20A and the amplifier 26A and through the contact P of the switching circuit 20B and the amplifier 26B to the switching circuit 27. The switching circuit 27 is alternately changed over by the switching signal S1' (Figure 5A) from the timing signal generating circuit 16. The switching signal S1' has a frequency of 30 Hz and effects change over of the switching circuit 27 between the half rotation period tA including the tape contact period of the head 1A and the half rotation period tB including the tape contact period of the head 1B. Accordingly, there is derived from the switching circuit 27 an intermittent PCM signal SR with one segment of such PCM signal SR occurring during each half rotation period, as shown in Figure 5C. This PCM signal SR is supplied to an audio playback circuit (not shown) in which a playback processor demodulates the signal SR to the original PCM signal, which is further supplied to a decoder. In the decoder, data from each block is detected by a block synchronising signal, corrected for error, de-interleaved, reconverted to an analog audio signal by a D/A (digital-to-analog) converter and then fed to an audio output.

The tracking control is carried out in the following manner.

If the head 1B traces the path having the tracing width W, as shown by dot and chain lines in Figure 3, and which includes the track 5B1, the head 1B also scans adjacent portions of the tracks 5A2 and 5A1 (which are adjacent to the track 5B1). Thus, as shown in Figure 3, in the region AT1, the pilot signal PA1 recorded in the track 5B1, the pilot signal PB3 recorded in the adjacent track 5A2 and the pilot signal PB1 recorded in the adjacent track 5A1 are successively reproduced by the head 1B, while, in the region AT2, the pilot signal PA2 recorded in the track 5B1, the pilot signal PB4 recorded in the track 5A2 and the pilot signal PB2 recorded in the adjacent track 5A1 are successively reproduced by the head 1B. The reproduced output of the head 1B, as derived from the switching circuit 27, is also supplied to the band pass filter 28 having the narrow pass band with the centre pass band frequency $f_0$, and which passes therethrough only the pilot signals as its output SR (Figure 5D). This output signal SF is supplied to the envelope detector 29.

The output SR of the switching circuit 27 is also supplied to the position detecting signal detector 34 which produces, at its output side, the position detecting signal S10 shown in Figure 5E. This signal S10 is supplied to the pulse generator 35 and also to the counter 36.

The pulse generator 35 generates the first sampling pulse SP1 which is substantially coincident with the first pulse of the signal S10, as shown in Figure 5G. The sampling pulse SP1 is supplied to the sample and hold circuit 30. At that time, as will be clear from Figures 5D and 5G, the sample and hold circuit 30 is placed in a state to sample the crosstalk components of the pilot signals PB3 and PB4 recorded in the adjacent track 5A2 at the side of the track 5B1 facing in the direction opposite to the transportation direction of the magnetic tape 2 shown by the arrow 4T (Figure 3). The signal thus sampled is supplied to one input terminal of the differential amplifier 31 as the tracking signal having an advanced phase.

After the time $tp$ following the initiation of each sampling pulse SP1, the crosstalk component of the pilot signal PB1 or PB2 in the adjacent track 5A1 at the side of the track SB1 facing in the tape transportation direction 4T is supplied from the envelope detector 29 directly to the other input terminal of the differential amplifier 31 as the tracking signal having a delayed phase. Accordingly, the differential amplifier 31 compares tracking signals corresponding to the crosstalk components of the pilot signals PB3, PB1 and of the pilot signals PB4, PB2.

The compared error signal from the differential amplifier 31 is supplied to the sample and hold circuit 32, in which it is sampled by the second sampling pulse SP2 which is generated with the time delay $tp$ after the initiation of each sampling pulse SP1 generated by the sampling pulse generator 38, as shown in Figure 5H. The sampling pulse generator 38 generates each second sampling pulse SP2 on the basis of the signal S11 (Figure 5F) from the counter 36 and the identifying signal S12 (Figure 5B) from the identifying signal generating circuit 37. Accordingly, there is obtained from the sample and hold circuit 32 a tracking control signal representing the difference between the inputs applied to the differential amplifier 31. This tracking control signal is supplied through the switch 75 to the adder 70, in which it is added with the velocity error signal and the bias signal supplied as a reference signal from the first DC power source 71 in the normal operation mode. The resulting signal is supplied from the adder 70 through the drive circuit 72 to the capstan motor 73 for controlling the transportation speed of the magnetic tape 2. In other words, the transport speed of the tape is controlled so that the level difference between both inputs to the differential amplifier 31 becomes zero. That condition is realised when the rotary head 1B, in tracing the track 5B1, overlaps or traces the margins of the adjacent two tracks 5A2 and 5A1 to the same extent. In other words, the rotary head 1B is controlled in its scanning operation in such a manner that the centre of the head 1B, considered in the direction of width of its head gap, will coincide with the centre or median of the track 5B1.

The above-described tracking operation is carried out similarly for the other tracks. For example, when the track 5A2 is traced by the head 1A, there are generated the crosstalk components of the pilot signals PA3, PA4 and PA1, PA2 recorded in the two adjacent tracks 5B2 and 5B1. Accordingly, the crosstalk components of the pilot signals PB3 and PB4 recorded in the track 5B2 are sampled by the sampling pulse SP1 supplied from the pulse generator 35 to the sample and hold circuit 30 to thereby obtain a tracking signal. Then, this tracking signal is supplied to one input of the differential amplifier 31 which, at its other input, receives the output from the envelope detector 29 corresponding to the crosstalk components of the pilot signals PA1 and PA2 recorded in the track 5B1. In the differential amplifier 31, the tracking signals corresponding to the crosstalk components of the pilot signals PA3, PA1 and PA4, PA2 are compared, and the compared error signal is sampled by the sample and hold circuit 32 in response to the sampling pulse SP2. Thus, it is possible to obtain the tracking control signal for the rotary head 1A.

Similarly, when the track 5B2 is traced by the head 1B, there are obtained the crosstalk components of the pilot signals PB5, PB6 and the pilot signals PB3, PB4 recorded in adjacent tracks 5A3 and 5A2, respectively. Since the crosstalk components of the pilot signals PB5 and PB6 are sampled by the sampling pulse SP1, the tracking signals corresponding to the crosstalk components of the pilot signals PB5, PB3 and PB6, PB4 are compared by the differential amplifier 31 and the resulting compared error signal is then sampled by the sample and hold circuit 32 at the sampling pulse SP2. Thus, it is possible to obtain a tracking control signal for the rotary head 1B during its tracing of the track 5B2.

In like manner, when the track 5A3 is traced by the head 1A, there are obtained the crosstalk components of the pilot signals PA5, PA6 and the pilot signals PA3, PA4 recorded in the adjacent tracks 5B3 and 5B2, respectively. Accordingly, the crosstalk components of the pilot signals PA5 and PA6 are sampled in response to the sampling pulse SP1, and the tracking signals corresponding to the crosstalk components of the pilot signals PA5, PA3 and PA6, PA4 are compared by the differential amplifier 31. The resulting compared error signal is finally sampled in response to the sampling pulse SP2 to obtain a tracking control signal for the head 1A during its tracing of the track 5A3.

In the tracking servo operation, a case may arise in which a rotary head traces a track having the opposite azimuth at the start of the tracking operation, in which case, the position detecting signal is not detected and hence the sampling pulse is not generated. Accordingly, upon starting, the switches 75 and 77 are positioned to engage their respective contacts $a$ so as to cut off the output of the sample and hold circuit 32 from the adder 70 and to apply to the adder 70 from the second DC power source 76 a potential that falls within the tracking servo pull-in range and serves as a velocity servo signal.

In connection with the above, let is be assumed that the rotary head 1B is placed on, for example, the track 5A1 shown in Figure 3 so that such head is in the opposite azimuth state to the track being initially scanned. When the rotary head 1B traces the track 5A1 without any drift, that is, the rotary head 1B is placed in the so-called on-track condition on the track 5A1, the position detecting signals TB1 and TB2 are not detected so that no sampling pulse is generated. However, when the bias signal from the second DC power source 76 is applied to the adder 70 with an offset, for example of +10% relative to the bias signal from the first DC power source 71, the capstan driven by the motor 73 transports the tape so that a track, for example, the track 5B5 having the same azimuth as the head 1B, always becomes aligned with the head 1B

so that the position detecting signals SA9 and SA10 recorded thereon are detected. Thus, the sampling pulse is generated on the basis of these position detecting signals SA9 and SA10.

This sampling pulse (the second sampling pulse SP2 in this example) is then counted by the counter 79. If the sampling pulse is detected a predetermined number of times, for example, twice or four times during one revolution of the rotary drum, the flip-flop circuit 78 is set. The resulting set output from the flip-flop circuit 78 changes over the switches 75 and 77 to engage their respective contacts *b* and thereby change over the present operation speed to the normal speed.

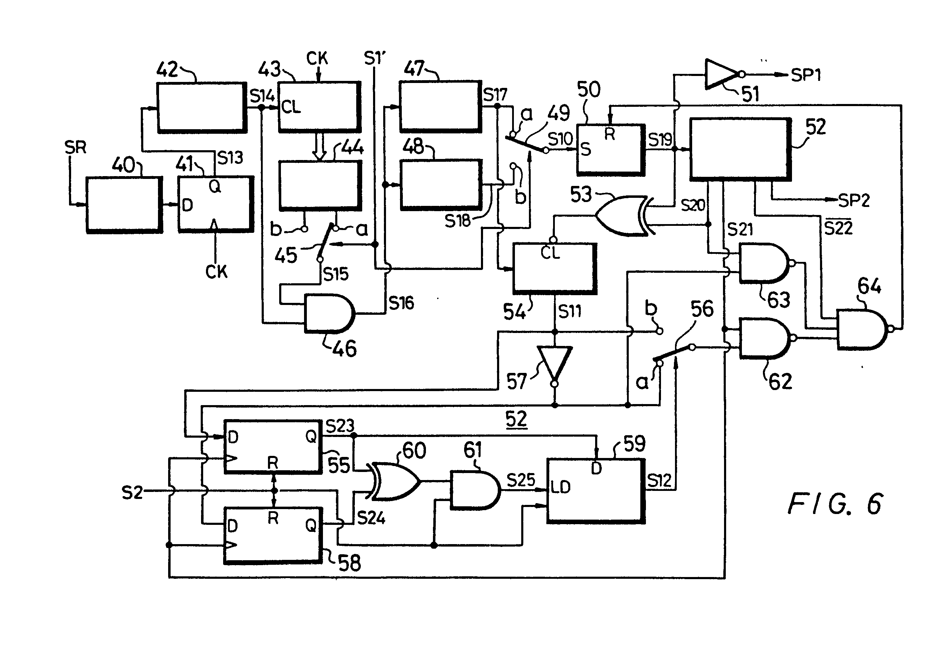

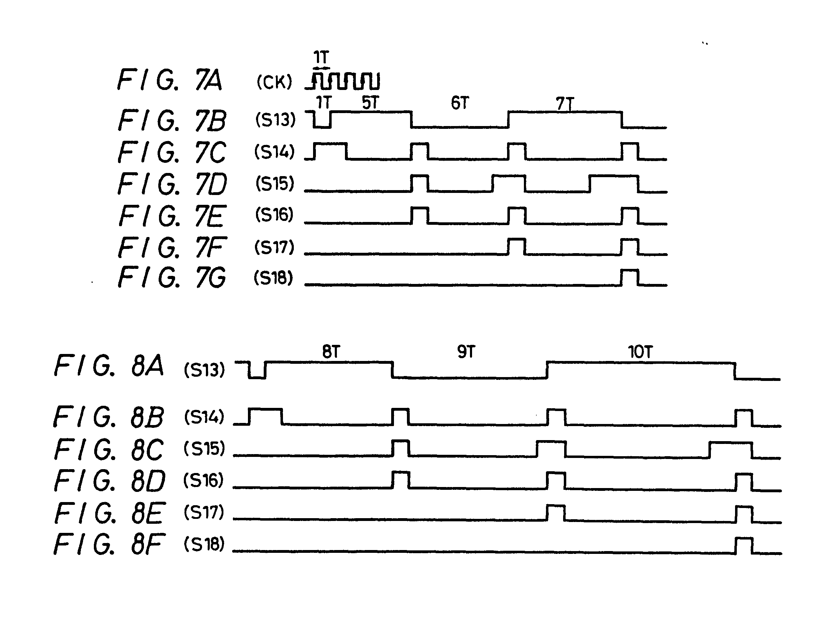

Figure 6 illustrates a practical circuit arrangement for generating the first and second sampling pulses SP1 and SP2, and which includes a limiter 40 receiving the signal SR from the switching circuit 27 of Figure 1. A D-type flip-flop circuit 41 receives the output of the limiter 40 and further is supplied, at its clock terminal, with a clock signal CK (Figure 7A). An edge detecting circuit 42 detects the edge of the output from the flip-flop circuit 41. The output from this edge detecting circuit 42 is supplied to a clear terminal CL of a counter 43 as a clear signal. The counter 43, from the time at which it is cleared, begins to count the clock signal CK (Figure 7A) which is also supplied to a clock terminal of the counter 43.

A gate circuit 44 having a decoding function selectively supplies to contacts *a* and *b* of a switch 45, on the basis of the counted results of the counter 43, an output corresponding to the frequency of the position detecting signal, the position detecting signals S and T having different frequencies as mentioned above. More specifically, during recording, if the position detecting signal S has a frequency of 522.67 kHz, it is normally recorded with a half-wave spacing of 9×Tck (Tck is the minimum clock length of the recording signal) whereas, if the position detecting signal T has a frequency of 784.00 kHz, it is normally recorded with a half-wave spacing of 6×Tck. Therefore, in view of the factors causing fluctuation in the reproducing mode, if (9±1)Tck is detected, for example, the position detecting signal S is used, whereas, if (6±1)Tck is detected, the position detecting signal T is used. Accordingly, the gate circuit 44 supplies the output corresponding to the position detecting signal S to the contact *a* of the switch 45 when the counted content of the counter 43 is (9±1)Tck, while the gate circuit 44 supplies the output corresponding to the position detecting signal T to the contact *b* of the switch 45 when the counted content of the counter 43 is (6±1)Tck. The switch 45 is suitably changed over by a switching signal S1'. For example, when the switching signal S1' is at a low level, the switch 45 is connected to the contact *a*, while, when the switching signal S1' is at a high level, the switch 45 engages its contact *b*. If the position detecting signal is accurately reproduced, a signal S15 derived from the switch 45 has 20 pulses when a position detecting signal S being reproduced has the short recording length tp/4, or the signal S15 has 40 pulses when the position detecting signal S being reproduced has the long recording length tp/2. Alternatively, the signal S15 has 30 pulses when a position detecting signal T having the short recording length tp/4 is being reproduced, or 60 pulses when the position detecting signal T being reproduced has the long recording length tp/2.

The output S15 of the switch 45 and the output S14 of the edge detector 42 are both supplied to an AND circuit 46. The output S16 of the AND circuit 46 is supplied to 2X continuation and 3X continuation detectors 47 and 48. These detectors 47 and 48 are provided to reduce erroneous detection of other patterns as position detecting signals. Accordingly, the numbers of detections by the detectors 47 and 48 are selected to ensure against mis-detection. The 2X continuation detector 47 produces an output when it detects the output of the AND circuit 46 twice, while the 3X continuation detector 48 produces an output when it detects the output of the AND circuit 46 three times continuously.

Outputs S17 and S18 of the detectors 47 and 48 are alternately supplied through a switch 49 to a set terminal *S* of a flip-flop circuit 50. The switch 49 is engaged with its contact *a* when the switching signal S1' is at a low level and with its contact *b* when the switching signal S1' is at a igh level, similarly to the switch 45. The output S19 of the flip-flop circuit 50 is inverted by an inverter 51 and delivered from the latter as the first sampling pulse SP1. The output S19 of the flip-flop circuit 50 is also supplied to a timing pulse generator 52 and to an exclusive-OR (hereinafter simply referred to as an EOR) circuit 53. A first output S20 of the timing pulse generating circuit 52 is also supplied to the EOR circuit 53, and the output of the EOR circuit 53 is supplied to a clear terminal CL of a counter 54. The counter 54 is arranged to count the output of, for example, the 2X continuation detector 47. Alternatively, the counter 54 may count the output of the 3X continuation detector 48 or the output of the switch 49. The counter 54 counts the number of pulses in the output from the detector 47 separately during a former half period tp/4 and a latter half period tp/4 and is put in the state to produce an output S11 from the counter 54 if the counted number is more than a predetermined value (for example, more than 6 pulses) which is determined in dependence on the mis-detection number and the detection ability. More specifically, when the pulse number counted during the former half period tp/4 is more than the predetermined value and the pulse number counted during the latter half period tp/4 is less than the predetermined value, the counter 54 judges the reproduced position detecting signal as being a position detecting signal having the short recording length (tp/4) and produces the signal S11 having only the first pulse. On the other hand, if the pulse number counted during the former half period tp/4 is more than the predetermined value and the pulse number counted during the latter half period tp/4 is also more than the predetermined value, the counter 54 judges such a reproduced position detecting signal as being a position detecting signal having the long recording length (tp/2) and produces the signal S11 formed of the first and second pulses. Further, if the number of pulses counted during the former half period tp/4 is less than the predetermined value, the counter 54 judges the signal causing such count to be the result of mis-detection and no signal is provided at the output of the counter 54.

The output of the counter 54 is supplied to an input terminal D of a D-type flip-flop circuit 55, to a contact terminal *b* of a switch 56, and further through an inverter 57 to an input terminal *D* of another D-type flip-flop circuit 58 and to a contact *a* of the switch 56. The output of the flip-flop circuit 55 is supplied to a data input terminal *D* of a half-counter 59 and to one input terminal of an exclusive-OR (EOR) circuit 60. This EOR circuit 60 is supplied at another input terminal with the output of the flip-flop circuit 58. The output of the EOR circuit 60 is supplied to one input terminal of an AND circuit 61 which, at another input terminal, is supplied with the signal S2. The signal S2 is also supplied to reset terminals *R* of the flip-flop circuits 55 and 58 and to the half-counter 59. The output of the AND circuit 61 is supplied to a load terminal LD of the half-counter 59. The half-counter 59 provides at its output, when the output of the AND circuit 61 is supplied to the load terminal LD, the value of the data terminal *D*, while in other cases, the half-counter 59 produces an output which is inverted in response to the polarity of the signal S2. The output S12 of the half-counter 59 is supplied as a switching signal to the switch 56 and serves to identify whether the track now being traced has recorded thereon a position signal having a long recording length or a short recording length.

The changed over output of the switch 56 is supplied to one input terminal of a NAND circuit 62 which is supplied at its other input terminal with a second output signal S21 from the timing pulse generator 52. The second output signal S21 is also supplied to the clock terminals of the flip-flop circuits 55 and 58. The output of the inverter 57 is supplied to one input terminal of another NAND circuit 63 which is supplied at its other input terminal with the first output S20 of the timing pulse generator 52.

The outputs of the NAND circuits 62 and 63 and a third output $\overline{S22}$ of the timing pulse generator 52 are supplied to a further NAND circuit 64. The output from the NAND circuit 64 is supplied to a reset terminal *R* of the flip-flop circuit 50 so that the flip-flop circuit 50 is reset when the output of the NAND circuit 64 attains a high level. The timing pulse generator 52 is arranged to generate a fourth output as the second sampling pulse SP2 with a delay of a predetermined time, for example, at the time *tp* after the first sampling pulse SP1 is generated.

In the arrangement described above with reference to Figure 6, the circuit elements 40 to 49 correspond to the position detecting signal detector 34 in Figure 1, the circuit elements 50 and 51 correspond to the pulse generator 35 in Figure 1, the circuit element 54 corresponds to the counter 36 in Figure 1, the circuit elements 55 and 57 to 61 correspond to the identifying signal generator 37 in Figure 1, and the circuit elements 52, 53, 56 and 62 to 64 correspond to the timing pulse generator 38 in Figure 1.

The operation of the circuit arrangement shown in Figure 6 will now be described with reference to Figures 7 to 10.

Let it be assumed that the signal SR from the switching circuit 27 is supplied through the limiter 40 to the flip-flop circuit 41 and that a clock signal CK (Figure 7A) is supplied to the flip-flop circuit 41 and, on the basis of this clock signal CK, the flip-flop circuit 41 produces at its output side a signal S13 (Figure 7B). This signal S13 is continuous during each of the durations 5T, 6T and 7T, and it thus indicates the fact that the position detecting signal T of high frequency is being reproduced. When the signal S13 is supplied to the edge detecting circuit 42, the edges of the signal S13 are detected and, at the output of the detector 42 there is generated a signal S14 (Figure 7C). The signal S14 is supplied to the counter 43 as a clear signal for the latter so that the counter 43 counts the clock signal CK during each period in which the signal S14 is at the low level. The counted content of the counter 43 is decoded by the gate circuit 44, delivered to the contact *b* of the switch 45 and then developed at the output side of the switch 45 as the signal S15 (Figure 7D). This signal S15 and the signal S14 are supplied to respective inputs of the AND circuit 46 and thus a signal S16 (Figure 7E) is generated at the output side of the AND circuit 46. This signal S16 is supplied to the detectors 47 and 48. When the detector 47 detects the signal S16 twice continuously, the detector 47 produces at its output side a signal S17 (Figure 7F) and, when the detector 48 detects the signal S16 three times continuously, the detector 48 produces, at its output, a signal S18 (Figure 7G).

As earlier noted, Figures 7A to 7G illustrate the case where a position detecting signal T of high frequency is reproduced, and Figures 8A to 8F similarly illustrate a case where a position detecting signal S of low frequency is reproduced. In the case of the position detecting signal S, the duration of the signal to be detected is also made long, for example, as indicated at each of 8T, 9T and 10T in Figure 8A.

In the latter case of a reproduced position detecting signal S, the operation is similar to that described above for the position detecting signal T except for the fact that the signal S15 shown in Figure 8C is derived from the contact *a* of the switch 45 which has been changed over by the switching signal S1'.

The outputs of the detectors 47 and 48 are respectively supplied to the contacts *a* and *b* of the switch 49 which is also changed over by the switching signal S1'. The signal S10 is obtained as the output of the switch 49. In the normal operation mode, in the case of the position detecting signal T having the high frequency and the position detecting signal S having the low frequency, the first pulses of the position detecting signals T and S are substantially equal to the first duration of the signal S10.

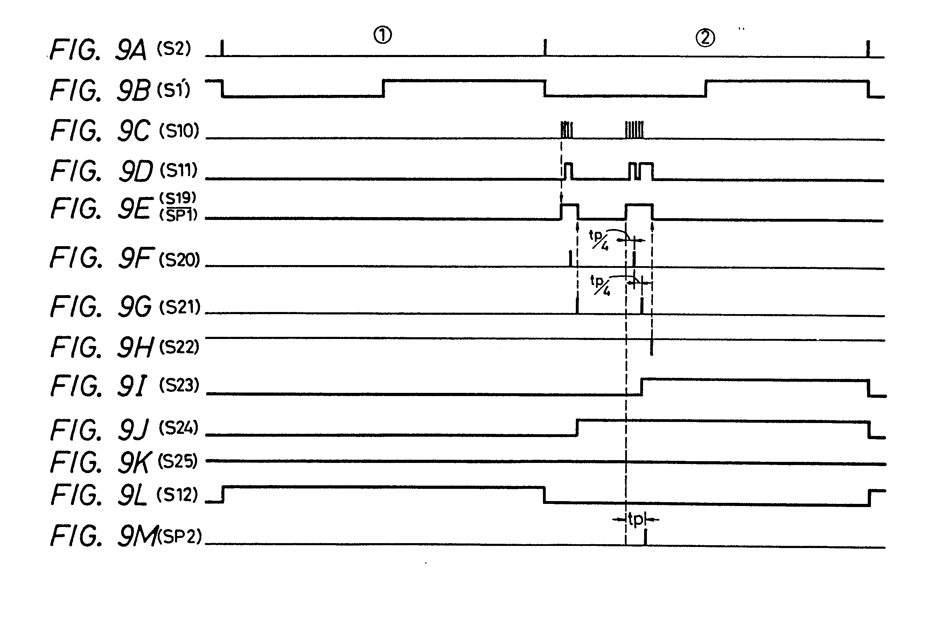

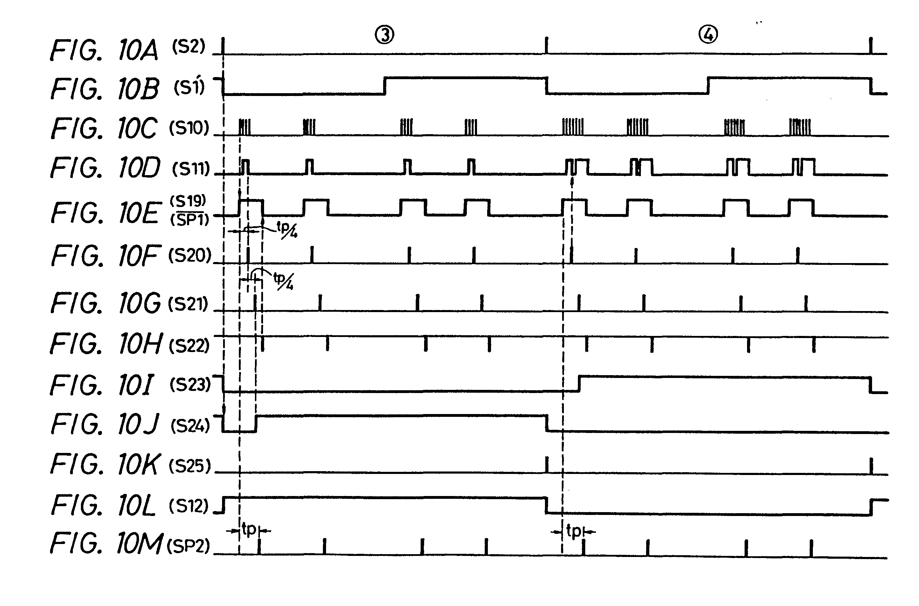

The operation of the circuit elements provided after the detectors 47 and 48 will now be described below with reference to Figures 9A to 9M, in which the reference ① indicates signal waveforms at respective points of the above-mentioned first mode and the reference ② indicates signal waveforms at respective points of the above-mentioned second mode, and with reference to Figures 10A to 10M, in which the reference ③ indicates signal waveforms at respective points of the above-mentioned third mode and the reference ④ indicates signal waveforms at respective points of the above-mentioned fourth mode.

Since no position detecting signal is detected in the first mode ①, as shown in Figure 9C, no first sampling pulse SP1 (Figure 9E) and no second sampling pulse SP2 (Figure 9M) are produced.

In the second mode ②, position detecting signals having long and short recording lengths are both detected while tracing a single track so that, at the output side of the switch 49 (Figure 6), there is produced a signal S10, as shown in Figure 9C. In this signal S10 shown in Figure 9C, the initial signal portion corresponds to the position detecting signal having the short recording length (tp/4), while the later signal portion corresponds to the position detecting signal having the long recording length (tp/2). This signal S10 is supplied to the flip-flop circuit 50 so that the latter produces, at its output, a signal S19 having a predetermined width measured from the first pulse of the signal S10, as shown in Figure 9E. This signal S19 is inverted by the inverter 51 and then supplied to the sample and hold circuit 30 (Figure 1) as the first sampling signal SP1.

The signal S19 is also supplied to the timing pulse generating circuit 52 which generates the first output S20 with a delay of a predetermined time period, for example, the time period tp/4, from the leading edge of the signal S19, as shown in Figure 9F. This first output S20 and the signal S19 are both supplied through the EOR circuit 53 to the counter 54 as the clear signal for the latter. The counter 54 counts the signals S17 from the detector 47 during the former half period of tp/4 and during the latter half period of tp/4 separately from a time at which it is cleared. If the number of pulses of the signal S17 counted during the former half period of tp/4 is more than the predetermined value and the number of pulses of the signal S17 counted during the latter half period of tp/4 is less than the predetermined value, the counter 54 judges such signal as being a position detecting signal having the short recording length and produces the signal S11 with only a first pulse, as shown at the initial position in Figure 9D. If the numbers of pulses of the signal S17 counted during the former half period of tp/4 and during the latter half period of tp/4 are both more than the predetermined value, the counter 54 judges such signal as being a position detecting signal having the long recording length and provides signals S11 with both first and second pulses, as shown at the later position in Figure 9D.

The signal S11 is supplied to the input terminal D of the flip-flop circuit 55. The signal S11 is also inverted by the inverter 57 and then supplied to the input terminal D of the flip-flop circuit 58. Further, after a delay of a predetermined time period, for example the time period tp/4, relative to the first output S20, the timing pulse generator 52 provides a second output 21 (Figure 9G) which is supplied as the clock signal to the flip-flop circuits 55 and 58. Accordingly, at the outputs of the flip-flop circuits 55 and 58, there are generated signals S23 and S24, respectively (Figures 9I and 9J). These signals S23 and S24 are supplied through the EOR circuit 60 and the AND circuit 61 which is also supplied with the signal S2 so that the AND circuit 61 generates at its output a signal S25 of low level (Figure 9K). Since the signal S25 supplied to the load terminal LD of the half-counter 59 is low in level, the half-counter 59 does not load the signal S23 supplied to its data terminal D. In other words, the half-counter 59 produces an identifying signal S12 (Figure 9L) which is changed in dependence on the signal S2. The switch 56 is changed over by the signal S12 so that, when the signal S12 is low, the switch 56 is positioned to engage its contact a, whereas, when the signal S12 is high, the switch 56 is positioned to engage its contact b. Further, the timing pulse generator 52 generates a third output S22 (Figure 9H) in the form of a negative pulse delayed by a predetermined time period, for example tp, after the leading edge of the signal S19 (Figure 9E).

The NAND circuits 62, 63 and 64 select which one of the outputs S20, S21 and S22 from the generator 52 should be used as the reset signal for the flip-flop circuit 50. When the signal S10 is detected but the first pulse of the signal S11 is low, that is a position detecting signal is not detected at all, the first output S20 of the generator 52 is selected as the reset signal for the flip-flop circuit 50. In other words, in this case, the signal S10 is irrelevant to the polarity of the identifying signal S12. On the other hand, when the identifying signal S12 is low and it is expected that a position detecting signal having the long recording length will be reproduced, if only the first pulse of the signal S11 is generated, the second output S21 (Figure 9G) from the generator 52 is selected as the reset signal and the second sampling pulse SP2 is not generated. When the identifying signal S12 is low and the first and second pulses of the signal S11 are generated, the third output S22 (Figure 9H) from the generator 52 is selected as the reset signal and the second sampling pulse SP2 (Figure 9M) is generated. Further, when the identifying signal S12 is high and it is expected that a position detecting signal having the short recording length will be reproduced, if only the first pulse of the signal S11 is generated, the third output S22 from the generator 52 is selected as the reset signal and the second sampling pulse SP2 is produced. Furthermore, when the identifying signal S12 is high and the first and second pulses of the signal S11 are generated, the second output S21 from the generator 52 is selected as the reset signal and a second sampling pulse SP2 is not generated.

Accordingly, in the second mode ②, the signal S19 corresponding to the position detecting signal having the short recording length is reset by the second output S21 and the signal S19 corresponding to the position detecting signal having the long recording length is reset by the third output S22.

The timing pulse generator 52 is arranged to generate a fourth output in the form of the second sampling pulse SP2 (Figure 9M) delayed by the time tp after the first sampling pulse SP1 (Figure 9E). However, in the case of the position detecting signal having the short recording length in the second mode, the flip-flop circuit 50 which precedes the generator 52 is reset before expiration of the delay tp as described above so that the timing pulse generator 52 does not generate the second sampling pulse SP2. On the other hand, in the case of the position detecting signal having the long recording length in the second mode, the flip-flop circuit 50 is not yet reset in the midst of the delay period tp so that the timing pulse generator 52 generates the second sampling pulse SP2 as shown in Figure 9M, and this second sampling pulse SP2 is supplied to the sample and hold circuit 32 (Figure 1).

In the third mode ③, the position detecting signal having the short recording length is detected more than one time so that the switch 49 generates, at its output, the signal S10 shown in Figure 10C. This signal S10 is supplied to the flip-flop circuit 50 which generates the signal S19 (Figure 10E) having a predetermined width measured from the first pulse of each signal S10. This signal S19 is inverted by the inverter 51 and then supplied to the sample and hold circuit 30 (Figure 1) as the first sampling pulse SP1.

The signal S19 is also supplied to the timing pulse generator 52 which generates, at its output, a first output S20 delayed by the time period tp/4 from the leading edge of the signal S19 as shown in Figure 10F. This output S20 and the signal S19 are both supplied through the EOR circuit 53 to the counter 54 as a clear signal for the latter. From the time at which it is cleared, the counter 54 starts counting the signal S17 from the detector 47, as described above. In the case of the third mode ③, the number of pulses of the signal S17 counted during the initial half period tp/4 is more than the standard value and the number of pulses of the signal S17 counted during the latter half period tp/4 is less than the predetermined value so that the signal S17 is seen to be a position detecting signal having the short recording length. Thus, the counter 54 produces the signal S11 having only the first pulse, as shown in Figure 10D.

The signal S11 is supplied directly to the input terminal D of the flip-flop circuit 55, and also inverted by the inverter 57 and then supplied to the input terminal D of the flip-flop circuit 58. These flip-flop circuits 55 and 58 are supplied at their clock terminals with the second outputs S21 (Figure 10G) from the timing pulse generator 52 so that the signals S23 and S24 (Figures 10I and 10J) are provided at the outputs of the flip-flop circuits 55 and 58, respectively. These signals S23 and S24 are supplied through the EOR circuit 50 to the AND circuit 61 so that the latter produces, as its output, a signal S25 shown in Figure 10K. This signal S25 is supplied to the load terminal LD of the half-counter 59 and causes the signal S23 supplied to the data terminal D of the half-counter 59 to be loaded therein. In response to such loading of the signal S23, the identifying signal S12 at the output of the half-counter 59 is inverted to the low level at the end of the third mode, as shown in Figure 10L. In other words, although the leading edge of the identifying signal S12 at the initiation of the third mode is merely changed in dependence on the polarity of the signal S2, the trailing edge of the identifying signal S12 at the termination of the third mode is changed to the low level with the assumption that during the next revolution of the rotary drum, that is, in the fourth mode, a track on which is recorded a position detecting signal having the long recording length will surely be traced, because a position detecting signal having the short recording length is recorded in the track which is now being traced during one revolution of the rotary drum, that is, during the period of the signal S2.

In the third mode, since the identifying signal S12 is at a high level and only the first pulse of the signal S11 is generated, the third output S22 is selected as the reset signal for the flip-flop circuit 50. In the third mode, the flip-flop circuit 50 is not reset during the time period *tp* so that the timing pulse generator 52 generates the second sampling pulse SP2 as shown in Figure 10M.

In the fourth mode ④, since a position detecting signal having the long recording length is detected more than once, the switch 49 produces, at its output, the signal S10 shown in Figure 10C. This signal S10 is supplied to the flip-flop circuit 50 which produces, at its output, the signal S19 of predetermined width measured from the first pulse of each signal S10, as shown in Figure 10E. The signal S19 is inverted by the inverter 51 and then supplied to the sample and hold circuit 30 (Figure 1) as the first sampling pulse SP1.

The signal S19 is also supplied to the timing pulse generator 52 which generates, at its output, the first output S20 delayed by tp/4 from the leading edge of the signal S19, as shown in Figure 10F. This output signal S20 and the signal S19 are supplied through the EOR circuit 53 to the counter 54 as a clear signal. From the time at which the counter 54 is cleared, it starts counting the signal S17 derived from the detector 47 as described above. In the case of the fourth mode ④, since the numbers of pulses of the signal S17 counted during the former half of tp/4 and the latter half of tp/4 are both more than the predetermined value, such signal S17 is regarded as a position detecting signal having the long recording length. As a result, the counter 54 generates the signal S11 having the first and second pulses, as shown in Figure 10D.

The signal S11 is supplied directly to the input terminal D of the flip-flop circuit 55, and through the inverter 57 to the input terminal D of the flip-flop circuit 58. These flip-flop circuits 55 and 58 are supplied at their clock terminals with the stored output S21 (Figure 10G) from the timing pulse generator 52 so thah the flip-flop circuits 55 and 58 generate, at their outputs, the signals S23 and S24 as shown in Figures 10I and 10J, respectively. These signals S23 and S24 are supplied through the EOR circuit 60 and to the AND circuit 61 and the latter generates, at its output, the signal S25 shown in Figure 10K. This signal S25 is supplied to the load terminal LD of the half-counter 59 and, in response thereto, the signal S23 supplied to the data terminal D of the half-counter 59 is loaded into the latter. In response thereto, the identifying signal S12 developed at the output of the half-counter 59 is inverted to the high level at the end of the fourth mode as shown in Figure 10L. In other words, the leading edge of the identifying signal S12 is changed to the high level at the end of the fourth mode under the assumption that a position detecting signal having the long recording length is recorded on the track which is now being traced during a revolution of the rotary drum (the period of the signal S2) and that a track on which a position detecting signal having the short recording length is recorded surely will be scanned during the next revolution of the rotary drum, that is, in the fifth mode (not shown).

In the fourth mode, since the identifying signal S12 is at the low level and the first and second pulses of the signal S11 are generated, the third output $\overline{S22}$ of the generator 52 is selected as the reset signal for the flip-flop circuit 50. Further, in the fourth mode, during the time period tp, the flip-flop circuit 50 is not reset so that the timing pulse generator 52 generates the second sampling pulse SP2, as shown in Figure 10M.

It will be appreciated that, in the embodiment of the invention described above, a position detecting signal reproduced during one revolution of the rotary drum is detected, it is judged whether the detected position detecting signal has a short or long recording length and in response to such judged result there is immediately generated an identifying signal which identifies the track to be traced or scanned during the next revolution of the rotary drum. Accordingly, even if the track indicated by the identifying signal and the next track are in practice not coincident with each other in the initial state, that is when starting the tracking operation and which corresponds to the above-mentioned second mode, the correct judged result can be obtained during the next revolution of the drum so that the tracking pull-in time is reduced, and stable tracking control is achieved.

Further, velocity control is provided after the sample and hold circuit 32 so that, during a predetermined time after the operation has been started, the speed of the capstan which transports the record medium is changed to a predetermined extent from that for the normal operation mode. By reason of the foregoing, even during starting of the tracking servo, the position detecting signal is detected and, as a result, a sampling pulse can be generated rapidly. Thus, the starting characteristic of the tracking servo can be improved and tracking control can be accurately carried out substantially over the whole range of the tracking servo.

## Claims

1. Tracking control apparatus for controlling tracking alignment of a rotary head (1A, 1B) with respect to record tracks appearing in succession on a record medium (2) and in each of which there are recorded, at predetermined positions varying from track to track in accordance with a predetermined repeating sequence, pilot signals (P) for controlling tracking and two position detecting signals (S, T) having equal recording lengths and which identify said positions of the pilot signals (P) in adjacent tracks, repeating alternating first and second tracks having recorded thereon in alternating positions with respect to each other first and second position detecting signals (S, T) of different recording lengths respectively, the apparatus comprising:

reproducing means (27, 34) responsive to the output (SR) of said rotary head (1A, 1B) for reproducing said position detecting signals (S, T) recorded in a track traced by said rotary head (1A, 1B);

detecting means (36) for detecting said recording length of each position detecting signal (S, T) reproduced by said reproducing means (27, 34);

means (37) responsive to said detecting means (36) for providing an identifying signal (S12) which identifies said recording length of the position detecting signal (S, T) being reproduced from the track traced by said rotary head (1A, 1B) only when at least two position detecting signals (S, T) having the same recording length have been detected successively; and

generating means (35, 38) responsive to said identifying signal (S12) for generating a sampling signal (SP1, SP2) timed to sample the pilot signals (P) reproduced as cross-talk from tracks adjacent said track being traced by said rotary head (1A, 1B), whereby tracking control can be effected.

2. Apparatus according to claim 1, wherein said position detecting signals (S, T) are recorded in each track with long and short recording lengths, and wherein said means (37) for providing said identifying signal (S12) is operative to generate a first state of the identifying signal (S12) for indicating that a position detecting signal (S, T) having a short recording length will be reproduced from a predetermined track only when a position detecting signal (S, T) having a long recording length is detected more than once from said track being traced by said rotary head (1A, 1B), and is operative to generate a second state of said identifying signal (S12) for indicating that a position detecting signal (S, T) having a long recording length will be reproduced after a predetermined track, only when a position detecting signal (S, T) having a short recording length has been detected more than once from said track being traced by the rotary head (1A, 1B).

3. Apparatus according to claim 1, wherein said generating means (35, 38) is operative to generate a sampling signal (SP1, SP2) when said identifying signal (S12) indicates that a position detecting signal (S, T) having a long recording length will be reproduced and reproduction of a position detecting signal (S, T) having a long recording length is detected, and when said identifying signal (S12) indicates that a position detecting signal (S, T) having a short recording length will be reproduced and reproduction of a position detecting signal (S, T) having a short recording length is detected.

4. Apparatus according to claim 1, claim 2 or claim 3, wherein said detecting means (36) includes counter means (54) supplied with an output (S17) of said reproducing means (27, 34), means (53) for clearing said counter means (54) during a time period corresponding to a position detecting signal (S, T) having a short recording length, said counter means (54) generating a first pulse when a position detecting signal (S, T) having said short recording length is detected in a predetermined cycle and generating first and second pulses when a position detecting signal (S, T) having a long recording length is detected in said predetermined cycle.

5. A tracking control apparatus according to claim 4, wherein said means (37) for providing an

## EP 0 219 303 B1

identifying signal (S12) includes inverting means (57) for inverting the output (S11) of said counter means (54), first and second holding means (55, 58) for holding outputs of said counter means (54) and said inverting means (57), respectively, at each point in time corresponding to a position detecting signal (S, T) having a long recording length, frequency dividing counter means (59) for dividing a pulse generated at every predetermined track and for generating said identifying signal (S12), and means (60, 61) for changing the state of said frequency dividing counter means (59) in response to outputs (S23, S24) of said first and second holding means (55, 58).

6. Apparatus according to claim 4 or claim 5, wherein said generating means (35, 38) for generating the sampling signal (SP1, SP2) comprises bistable means (50) set by the output (S10) of said reproducing means (27, 34), means (51) for generating a first sampling pulse (SP1) in response to an output (S19) of said bi-stable means (50), timing pulse generating means (52) for generating a first timing pulse (S22) corresponding to a position detecting signal having a short recording length, a second timing pulse (S21) corresponding to a position detecting signal having a long recording length, a second sampling pulse (SP2) and a third timing pulse (S20) in response to the output of said bi-stable means (50), and logic means (62 to 64) supplied with said first timing pulse (S22), said second timing pulse (S21) and said third timing pulse (S20) and also with an output (S11) of said counter means (54) or an output of said inverting means (57) in response to an output (S12) of said frequency-dividing counter (59), said logic means (62 to 64) being operative to reset said bi-stable means (50) by said first timing pulse (S22) when said first pulse is absent from the output (S11) of said counter means (54), said logic means (62 to 64) being operative to reset said bi-stable means (50) by said second timing pulse (S21) when said identifying signal (S12) has a first level and only said first pulse is generated, said logic means (62 to 64) being operative to reset said bi-stable means (50) by said third timing pulse (S20) when said identifying signal (S12) has said first level and said first and second pulses are generated, said logic means (62 to 64) being operative to reset said bi-stable means (50) by said third timing pulse (S20) when said identifying signal (S12) has a second level and only said first pulse is generated, and said logic means (62 to 64) being operative to reset said bi-stable means (50) by said second pulse when said identifying signal (S12) has the second level and said first and second pulses are generated.

7. Apparatus according to any one of the preceding claims, wherein said reproducing means (27, 34) includes half cycle detecting means (40 to 44) for detecting a half cycle of a waveform representing said position detecting signals (S, T) from a signal reproduced by said rotary head (1A, 1B) and continuous cycle detecting means (47, 48) connected to said half cycle detecting means (40 to 44) for detecting a continuous cycle of the waveform representing the position detecting signals (S, T).

8. Apparatus according to claim 7, wherein said half cycle detecting means (40 to 44) includes limiter means (40) supplied with said output (SR) from said rotary head (1A, 1B), an edge detecting circuit (42) for detecting an edge of an output (S13) from said limiter means (40), counter means (43) for counting a clock signal (CK) and responsive to an output (S14) of said edge detecting circuit (42) so as to be cleared at every detected edge, and gating means (44) for generating a pulse when the count of said counter means (43) corresponds to a position detecting signal (S, T).

9. Apparatus according to any one of the preceding claims, comprising sample and hold means (32) for sampling a pilot signal (P) reproduced as cross-talk from an adjacent track in response to said sampling signal (SP1, SP2) and for holding the sampled pilot signal (P), speed control means (74) for controlling the transporting speed of said record medium (2) in accordance with the sampled and held pilot signal (P), and means (70, 75, 76, 77) for changing the controlled transporting speed by a predetermined amount from a normal tape transporting speed during a predetermined time period after commencement of tracking control operation.


**Patentansprüche**

1. Spurführungs-Steuergerät zur Steuerung der Spurausrichtung eines rotierenden Kopfes (1A, 1B) relativ zu Aufzeichungsspuren, die einanderfolgend auf einem Aufzeichungsmedium (2) erscheinen und in denen jeweils in vorbestimmten Positionen, die sich in Abhängigkeit von einer vorbestimmten Wiederholfolge von Spur zu Spur ändern, Pilotsignale (P) zur Spurführungs-Steuerung sowie zwei Positionsdetektorsignale aufgezeichnet sind, die gleiche Aufzeichnungslängen haben und die genannten Positionen des Pilotsignals (P) in benachbarten Spuren identifizieren, wobei sich erste und zweite Spuren abwechselnd wiederholen, auf denen in miteinander abwechselnden Positionen erste bzw. zweite Positionsdetektorsignale (S, T) aufgezeichnet sind,

wobei das Gerät folgende Teile umfaßt:

eine Wiedergabeeinrichtung (27, 34), die auf das Ausgangssignal (SR) des rotierenden Kopfes (1A, 1B) anspricht und die Positionsdetektorsignale (S, T) wiedergibt, die in einer von dem rotierenden Kopf (1A, 1B) abgetasteten Spur aufgezeichnet sind,

eine Detektoreinrichtung (36) zur Feststellung der Aufzeichnungslänge jedes der von der Wiedergabeeinrichtung (27, 34) wiedergegebenen Positionsdetektorsignale (S, T),

eine Einrichtung (37), die auf die Detektoreinrichtung (36) anspricht und die ein die Aufzeichnungslänge des von der durch den rotierenden Kopf (1A, 1B) abgetasteten Spur wiedergegebenen

Positionsdetektorsignals (S, T) kennzeichnendes Identifiziersignal (S12) nur dann liefert, wenn aufeinanderfolgend wenigstens zwei Positionsdetektorsignale (S, T) mit der gleichen Aufzeichnungslänge detektiert wurden,

sowie eine auf das Identifiziersignal (S12) ansprechende Generatoreinrichtung (35, 38) zur Erzeugung eines Abtastsignals (SP1, SP2), das zeitlich so gesteuert ist, daß es die Pilotsignale abtastet, die als Übersprechen von Spuren wiedergegeben werden, die der von dem rotierenden Kopf (1A, 1B) gerade wiedergegebenen Spur benachbart sind, wodurch die Spurführung-Steuerung durchgeführt werden kann.

2. Gerät nach Anspruch 1, bei dem die Positionsdetektorsignale (S, T) in jeder Spur mit langen und kurzen Aufzeichnungslängen aufgezeichnet sind, und bei dem die Einrichtung (37) zur Erzeugung des Identifiziersignals (S12) einen ersten Zustand des Identifiziersignals (S12), der anzeigt, daß ein Positionsdetektorsignal (S, T) mit kurzer Aufzeichnungslänge von einer vorbestimmten Spur wiedergegeben wird, nur dann erzeugt, wenn auf der Spur, die gerade von dem rotierenden Kopf (1A, 1B) abgetastet wird, mehr als einmal ein Positionsdetektorsignal (S, T) mit langer Aufzeichnungslänge detektiert wird, während die genannte Einrichtung (37) einen zweiten Zustand des Identifiziersignals (S12), der anzeigt, daß ein Positionsdetektorsignal (S, T) mit langer Aufzeichnungslänge auf einer vorbestimmten Spur wiedergegeben wird, nur dann erzeugt, wenn auf der Spur, die gerade von dem rotierenden Kopf (1A, 1B) abgetastet wird, mehr als einmal ein Positionsdetektorsignal (S, T) mit kurzer Aufzeichnungslänge festgestellt wird.

3. Gerät nach Anspruch 1, bei dem die Generatoreinrichtung (35, 38) ein Abtastsignal (SP1, SP2) erzeugt, wenn das Identifiziersignal (S12) anzeigt, daß ein Positionsdetektorsignal (S, T) mit langer Aufzeichnungslänge wiedergegeben werden soll und die Wiedergabe eines Positionsdetektorsignals (S, T) mit langer Aufzeichnungslänge festgestellt wird, und wenn das Identifiziersignal (S12) anzeigt, daß ein Positionsdetektorsignal (S, T) mit kurzer Aufzeichnungslänge wiedergegeben werden soll und die Wiedergabe eines Positionsdetektorsignals (S, T) mit kurzer Aufzeichnungslänge festgestellt wird.

4. Gerät nach Anspruch 1, 2 oder 3, bei dem die Detektoreinrichtung (36) eine Zähleinrichtung (54) enthält, die mit einem Ausgangssignal (S17) der Wiedergabeeinrichtung (27, 34) beaufschlagt wird, ferner eine Einrichtung (53) zum Löschen der Zähleinrichtung (54) während einer Zeitperiode, die einem Positionsdetektorsignal (S, T) mit kurzer Aufzeichnungslänge entspricht, wobei die Zähleinrichtung (54) einen ersten Impuls erzeugt, wenn innerhalb eines vorbestimmten Zyklus ein Positionsdetektorsignal (S, T) mit der kurzen Aufzeichnungslänge festgestellt wird, und einen ersten und einen zweiten Impuls, wenn in dem vorbestimmten Zyklus ein Positionsdetektorsignal (S, T) mit langer Aufzeichnungslänge festgestellt wird.

5. Gerät nach Anspruch 4, bei dem die Einrichtung (37) zur Erzeugung des Identifiziersignals (S12) umfaßt:

eine Invertierungseinrichtung (57) zum Invertieren des Ausgangssignals der Zähleinrichtung (54),

eine erste und eine zweite Halteeinrichtung (55, 58) zum Halten der Ausgangssignale der Zähleinrichtung (54) bzw. der Invertierungseinrichtung (57) in jedem Zeitpunkt, der einem Positionsdetektorsignal (S, T) mit langer Aufzeichnungslänge entspricht,

eine Frequenzteiler-Zähleinrichtung (59) zum Teilen eines bei jeder vorbestimmten Spur erzeugten Pulses und zur Erzeugung des genannten Identifiziersignals (S12),

sowie eine Einrichtung (60, 61) zur Zustandsänderung der Frequenzteiler-Zähleinrichtung (79) in Abhängigkeit von Ausgangssignalen (S23, S24) der ersten und der zweiten Halteeinrichtung (55, 58).

6. Gerät nach Anspruch 4 oder 5, bei dem die Generatoreinrichtung (35, 38) zur Erzeugung des Abtastsignals (SP1, SP2) umfaßt:

ein durch das Ausgangssignal (S10) der Wiedergabeeinrichtung (27, 34) gesetztes bistabiles Glied (50) zur Erzeugung eines ersten Abtastimpulses (SP1) in Abhängigkeit von einem Ausgangssignal (S19) des bistabilen Glieds (50),

eine Zeitgeberimpuls-Generatoreinrichtung (52) zur Erzeugung eines einem Positionsdetektorsignal mit kurzer Aufzeichnungslänge entsprechenden ersten Zeitgeberimpulses (S22), ferner eines einem Positionsdetektorsignal mit langer Aufzeichnungslänge entsprechenden zweiten Zeitgeberimpulses (S21), eines zweiten Abtastimpulses (SP2) und eines dritten Zeitgeberimpulses (S20) in Abhängigkeit von dem Ausgangssignal des bistabilen Glieds (50),

und eine logische Schaltung (62 bis 64), der der erste Zeitgeberimpuls (S22), der zweite Zeitgeberimpuls (S21) und der dritte Zeitgeberimpuls (S20) sowie in Abhängigkeit von einem Ausgangssignal (S12) der Frequenzteiler-Zähleinrichtung (59) ein Ausgangssignal (S11) der Zähleinrichtung (54) oder ein Ausgangssignal der Invertierungseinrichtung (57) zugeführt werden,

wobei diese logische Schaltung (62 bis 64) bewirkt,

— daß das bistabile Glied (50) durch den ersten Zeitgeberimpuls (S22) zurückgesetzt wird, wenn der erste Impuls in dem Ausgangssignal (S11) der Zähleinrichtung (54) fehlt,

— daß das bistabile Glied (50) von dem zweiten Zeitgeberimpuls (S21) zurückgesetzt wird, wenn das Identifiziersignal (S12) einen ersten Pegel hat und nur der erste Impuls erzeugt wird,

— daß das bistabile Glied (50) von dem dritten Zeitgeberimpuls (S20) zurückgesetzt wird, wenn das Identifiziersignal (S12) den ersten Pegel hat und der erste und der zweite Impuls erzeugt werden,

— daß das bistabile Glied (50) von dem dritten Zeitgeberimpuls (S20) zurückgesetzt wird, wenn das Identifiziersignal (S12) einen zweiten Pegel hat und nur der erste Impuls erzeugt wird,

— und daß bistabile Glied (50) von dem zweiten Impuls zurückgesetzt wird, wenn das Identifiziersignal (S12) den zweiten Pegel hat und der erste und der zweite Impuls erzeugt werden.

7. Gerät nach einem der vorhergehenden Ansprüche, bei dem die Wiedergabeeinrichtung (27, 34) eine Halbzyklus-Detektoreinrichtung (40 bis 44) umfaßt zur Detektierung eines Halbzyklus einer das Positionsdetektorsignal (S, T) repräsentierenden Wellenform aus einem von dem rotierenden Kopf (1A, 1B) wiedergegebenen Signal sowie eine mit dieser Halbzyklus-Detektoreinrichtung (40 bis 44) verbundene Detektoreinrichtung (47, 48) zur Detektierung eines kontinuierlichen Zyklus der die Positionsdetektorsignale (S, T) repräsentierenden Wellenform.

8. Gerät nach Anspruch 7, bei dem die Halbzyklus-Detektoreinrichtung (40 bis 44) eine mit dem Ausgangssignal (SR) des rotierenden Kopfes (1A, 1B) beaufschlagte Begrenzereinrichtung (40) umfaßt, ferner eine Flanken-Detektorschaltung (42) zur Detektierung einer Flanke eines Ausgangssignals (S13) der Begrenzereinrichtung (40), eine Zähleinrichtung (43) zum Zählen eines Taktsignals (CK), die auf ein Ausgangssignal (S14) der Flanken Detektorschaltung (42) in der Weise reagiert, daß sie bei jeder detektierten Flanke gelöscht wird, sowie eine Gatterschaltung (44), die einen Impuls erzeugt, wenn der Zählwert der Zähleinrichtung (43) einem Positionsdetektorsignal (S, T) entspricht.

9. Gerät nach einem der vorhergehenden Ansprüche mit einer Abtast- und Halteschaltung (32) zum Abtasten eines als Übersprechen von einer benachbarten Spur wiedergegebenen Pilotsignals (P) in Abhängigkeit von dem genannten Abtastsignal (SP1, SP2) und zum Halten des abgetasteten Pilot signals (P), ferner mit einer Geschwindigkeits-Steuereinrichtung (74) zum Steuern der Transportgeschwindigkeit des Aufzeichungsmediums (2) in Übereinstimmung mit dem abgetasteten und gehaltenen Pilotsignal (P), sowie mit Mitteln (70, 75, 76, 77) zum Ändern der gesteuerten Transportgeschwindigkeit um einen vorbestimmten Betrag gegenüber der normalen Transportgeschwindigkeit während einer vorbestimmten Zeitperiode nach dem Beginn des Spurführungs-Steuervorgangs.

**Revendications**

1. Dispositif de commande de poursuite pour commander l'alignement de poursuite d'une tête rotative (1A, 1B) vis-à-vis de pistes d'enregistrement apparaissant à la suite sur un support d'enregistrement (2) et sur chacune desquelles sont enregistrés, en des positions prédéterminées variant d'une piste à l'autre selon une séquence répétitive prédéterminée, des signaux pilotes (P) pour commander la poursuite et deux signaux de détection de position (S, T) ayant des longueurs d'enregistrement égales et qui identifient lesdites positions des signaux pilotes (P) de pistes adjacentes, répétant en alternance des première et seconde pistes sur lesquelles sont enregistrés, selon des positions en alternance l'une de l'autre, des premier et second signaux de détection de position (S, T) de longueurs d'enregistrement différentes, respectivement, le dispositif comprenant:

un moyen de reproduction (27, 34) asservi à la sortie (SR) de ladite tête rotative (1A, 1B) pour reproduire lesdits signaux de détection de position (S, T) enregistrés sur une piste suivie par ladite tête rotative (1A, 1B);

un moyen de détection (36) pour détecter ladite longueur d'enregistrement de chaque signal de détection de position (S, T) reproduit par ledit moyen de reproduction (27, 34);

un moyen (37) asservi audit moyen de détection (36) pour ne fournir un signal d'identification (S12) qui identifie ladite longueur d'enregistrement du signal de détection de position (S, T) qui est reproduit à partir de la piste suivie par ladite tête rotative (1A, 1B) que quand au moins deux signaux de détection de position (S, T) ayant la même longueur d'enregistrement ont été détectés successivement; et

un moyen de génération (35, 38) asservi audit signal d'identification (S12) pour engendrer un signal d'échantillonnage (SP1, SP2) synchronisé pour échantillonner les signaux pilotes (P) reproduits sous forme de diaphonie à partir de pistes adjacentes de ladite piste suivie par ladite tête rotative (1A, 1B), ce qui permet d'effectuer une commande de poursuite.

2. Dispositif selon la revendication 1, où lesdits signaux de détection de position (S, T) sont enregistrés sur chaque piste avec des longueurs d'enregistrement longues et courtes, et où ledit moyen (37) pour fournir ledit signal d'identification (S12) sert à engendrer un premier état du signal d'identification (S12) pour n'indiquer qu'un signal de détection de position (S, T) ayant une courte longueur d'enregistrement sera reproduit à partir d'une piste prédéterminée, que quand un signal de détection de position (S, T) ayant une grande longueur d'enregistrement est détecté plus d'une fois à partir de ladite piste suivie par ladite tête rotative (1A, 1B), et sert à engendrer un second état dudit signal d'identification (S12) pour indiquer qu'un signal de détection de position (S, T), ayant une grande longueur d'enregistrement sera reproduit après une piste prédéterminée, que quand un signal de détection de position (S, T) ayant une courte longueur d'enregistrement a été détecté plus d'une fois à partir de ladite piste suivie par la tête rotative (1A, 1B).

3. Dispositif selon la revendication 1, où ledit moyen de génération (35, 38) sert à engendrer un signal d'échantillonnage (SP1, SP2) quand ledit signal d'identification (S12) indique qu'un signal de détection de position (S, T) ayant une grande longueur d'enregistrement sera reproduit et qu'une reproduction d'un signal de détection de position (S, T) ayant une grande longueur d'enregistrement est détectée, et quand ledit signal d'identification (S12) indique qu'un signal de détection de position (S, T) ayant une courte longueur d'enregistrement sera reproduit et, qu'une reproduction d'un signal de détection de position (S, T) ayant une courte longueur d'enregistrement est détectée.

4. Dispositif selon la revendication 1, la revendication 2, ou la revendication 3, où ledit moyen de détection (36) inclut un moyen de comptage (54) alimenté par une sortie (S17) dudit moyen de reproduction (27, 34), un moyen (53) pour remettre à zéro ledit moyen de comptage (54) pendant une période correspondant à un signal de détection de position (S, T) ayant une courte longueur d'enregistrement, ledit moyen de comptage (54) engendrant une première impulsion quand un signal de détection de position (S, T) ayant ladite courte longueur d'enregistrement est détecté dans un cycle prédéterminé et engendrant des première et seconde impulsions quant un signal de détection de position (S, T) ayant une grande longueur d'enregistrement est détecté dans ledit cycle prédéterminé.

5. Dispositif de commande de poursuite selon la revendication 4, où ledit moyen (37) pour fournir un signal d'identification (S12) comprend un moyen inverseur (57) pour inverser la sortie (S11) dudit moyen de comptage (54), un premier et second moyen de maintien (55, 58) pour maintenir respectivement les sorties dudit moyen de comptage (54) et dudit moyen inverseur (57), à chaque instant correspondant à un signal de détection de position (S, T) ayant une grande longueur d'enregistrement, un moyen de comptage diviseur de fréquence (59) pour diviser une impulsion engendrée à chaque piste prédéterminée et pour engendrer ledit signal d'identification (S12), et un moyen (60, 61) pour changer l'état dudit moyen de comptage diviseur de fréquence (59) en réponse à des sorties (S23, S24) desdits premier et second moyen de maintien (55, 58).

6. Dispositif selon la revendication 4 ou la revendication 5, où ledit moyen de génération (35, 38) pour engendrer le signal d'échantillonnage (SP1, SP2) comprend un moyen bistable (50) armé par la sortie (S10) dudit moyen de reproduction (27, 34), un moyen (51) pour engendrer une première impulsion d'échantillonnage (SP1) en réponse à une sortie (S19) dudit moyen bistable (50), un moyen de génération d'impulsions de synchronisation (52) pour engendrer une première impulsion de synchronisation (S22) correspondant à un signal de détection de position ayant une courte longueur d'enregistrement, une seconde impulsion de synchronisation (S21) correspondant à un signal de détection de position ayant une grande longueur d'enregistrement, une seconde impulsion d'échantillonnage (SP2) et une troisième impulsion de synchronisation (S20) en réponse à la sortie dudit moyen bistable (50), et un moyen logique (62 à 64) alimenté par ladite première impulsion de synchronisation (S22), ladite seconde impulsion de synchronisation (S21) et ladite troisième impulsion de synchronisation (S20) et aussi par une sortie (S11) dudit moyen de comptage (54) ou une sortie dudit moyen inverseur (57) en réponse à une sortie (S12) dudit compteur diviseur de fréquence (59), ledit moyen logique (62 à 64) servant à désarmer le moyen bistable (50) par ladite première impulsion de synchronisation (S22) quand ladite première impulsion est absente de la sortie (S11) dudit moyen de comptage (54), ledit moyen logique (62 à 64) servant à désarmer ledit moyen bistable (50) par ladite seconde impulsion de synchronisation (S21) quand ledit signal d'identification (S12) est à un premier niveau et que seulement ladite première impulsion est engendrée, ledit moyen logique (62 à 64) servant à désarmer ledit moyen bistable (50) par ladite troisième impulsion de synchronisation (S20) quand ledit signal d'identification (S12) est audit premier niveau et que lesdites première et seconde impulsions sont engendrées, ledit moyen logique (62 à 64) servant à désarmer ledit moyen bistable (50) par ladite troisième impulsion de synchronisation (S20) quand ledit signal d'identification (S12) est à un second niveau et que seulement ladite première impulsion est engendrée, et ledit moyen logique (62 à 64) servant à désarmer ledit moyen bistable (50) par ladite seconde impulsion quand ledit signal d'identification (S12) est au second niveau et que lesdites première et seconde impulsions sont engendrées.

7. Dispositif selon l'une quelconque des revendications précédentes, où ledit moyen de reproduction (27, 34) comprend un moyen de détection de demi-cycle (40 à 44) pour détecter un demi-cycle d'une forme d'onde représentant lesdits signaux de position (S, T) à partir d'un signal reproduit par ladite tête rotative (1A, 1B) et un moyen de détection de cycle continu (47, 48) relié audit moyen de détection de demi-cycle (40 à 44) pour détecter un cycle continu de la forme d'onde représentant les signaux de détection de position (S, T).

8. Dispositif selon la revendication 7, où ledit moyen de détection de demi-cycle (40 à 44) inclut un moyen limiteur (40) alimenté par ladite sortie (SR) de la tête rotative (1A, 1B), un circuit détecteur de front (42) pour détecter un front d'une sortie (S13) dudit moyen limiteur (40), un moyen de comptage (43) pour compter un signal d'horloge (CK) et asservi à une sortie (S14) dudit circuit détecteur de front (42) afin d'être remis à zéro à chaque front détecté, et un moyen de porte (44) pour engendrer une impulsion quand le résultat de comptage dudit moyen de comptage (43) correspond à un signal de détection de position (S, T).

9. Dispositif selon l'une quelconque des revendications précédentes, comprenant un moyen d'échantillonnage et de maintien (32) pour échantillonner un signal pilote (P) reproduit comme diaphonie à partir d'une piste adjacente en réponse audit signal d'échantillonnage (SP1, SP2) et pour maintenir le signal pilote échantillonné (P), un moyen de commande de vitesse (74) pour contrôler la vitesse de défilement dudit support d'enregistrement (2) selon le signal pilote échantillonné et maintenu (P), et un moyen (70, 75, 76, 77) pour modifier la vitesse contrôlée de défilement d'une valeur prédéterminée à partir d'une vitesse de défilement normal d'une bande pendant une durée prédéterminée après le commencement de l'opération de commande de poursuite.

FIG. 1A

FIG. 1A | FIG. 1B

# F I G. 1B

FIG. 2

FIG. 3

EP 0 219 303 B1

FIG. 4A (S1)

FIG. 4B

FIG. 4C (S4)

FIG. 4D (S2)

FIG. 4E (S3)

FIG. 4F (S5)

FIG. 4G (S6)

FIG. 4H (S7)

FIG. 4I (S8)

FIG. 4J (S9)

tB(T)   tA(T)   tB   tA

$T+\frac{3}{2}tp$   T1   tp   T1

$\frac{3}{2}tp$   T1   $\frac{1}{2}tp$   $\frac{3}{2}tp$   T1   $\frac{1}{4}tp$

T   T1   $\frac{1}{2}tp$   T   T1   $\frac{1}{4}tp$

$T+\frac{1}{2}tp$   T1   $\frac{1}{2}tp$   tp   $\frac{1}{2}tp$   T1   $T+\frac{1}{4}tp$   T1   $\frac{1}{4}tp$   $\frac{3}{4}tp$   $\frac{5}{4}tp$

EP 0 219 303 B1

4

EP 0 219 303 B1

FIG. 5A (Sí)

FIG. 5B (S12)

FIG. 5C (SR)

FIG. 5D (SF)

FIG. 5E (S10)

FIG. 5F (S11)

FIG. 5G (SP1)

FIG. 5H (SP2)

F I G. 6

FIG. 7A (CK)

FIG. 7B (S13)

FIG. 7C (S14)

FIG. 7D (S15)

FIG. 7E (S16)

FIG. 7F (S17)

FIG. 7G (S18)

FIG. 8A (S13)

FIG. 8B (S14)

FIG. 8C (S15)

FIG. 8D (S16)

FIG. 8E (S17)

FIG. 8F (S18)

EP 0 219 303 B1

FIG. 9A (S2)
FIG. 9B (S1´)
FIG. 9C (S10)
FIG. 9D (S11)
FIG. 9E $\frac{(S19)}{(\overline{SP1})}$
FIG. 9F (S20)
FIG. 9G (S21)
FIG. 9H (S22)
FIG. 9I (S23)
FIG. 9J (S24)
FIG. 9K (S25)
FIG. 9L (S12)
FIG. 9M (SP2)

③ ④

FIG. 10A (S2)

FIG. 10B (S1)

FIG. 10C (S10)

FIG. 10D (S11)

FIG. 10E (S19)(SP1)

FIG. 10F (S20)

FIG. 10G (S21)

FIG. 10H (S22)

FIG. 10I (S23)

FIG. 10J (S24)

FIG. 10K (S25)

FIG. 10L (S12)

FIG. 10M (SP2)

tp/4  tp